# EUROPEAN PATENT APPLICATION

(11) **EP 4 749 852 A1**
(43) Date of publication of application: **27.05.2026**
(21) Application number: 24842812.0
(22) Date of filing: 15.05.2024
(51) Int. Cl.: H02G 3/04, F16G 13/16, H01B 12/02, H01F 5/00, H01F 6/06, H01R 43/00, H02G 11/00

(54) **LINEAR MATERIAL PROTECTION MEMBER AND METHOD FOR CONNECTING SUPERCONDUCTING WIRE MATERIAL**

(30) Priority: 19.07.2023 WO PCT/JP2023/026432
(71) Applicant: Helical Fusion Co., Ltd., Tokyo 104-0061 (JP)
(72) Inventor: MIYAZAWA, Junichi, Tokyo 104-0061 (JP)
(74) Representative: Cabinet Netter
(86) International application number: PCT/JP2024/018027
(87) International publication number: WO 2025/018016

(57) **Abstract**

A linear material protection member includes a plurality of blocks that protects a linear material including a superconducting tape wire material. A component constituting a bottom portion of a first block includes a first side disposed along one of a first side wall portion and a second side wall portion of the first block, a second side disposed on an opposite side of the first side, and a central region disposed between the first side and the second side. In addition, the component includes a second wire holding portion and a third wire holding portion formed along the first side in a state of being able to sandwich a first wire holding portion of the first component, and a screw hole that is disposed in the central region and is formed to penetrate the component in a thickness direction.

## Description

### TECHNICAL FIELD

The present invention relates to a linear material protection member that holds a linear material and a connection method of a superconducting wire material.

### BACKGROUND ART

Japanese Patent Application Laid-Open Publication No. 2019-102298 (Patent Document 1) describes a superconductor in which a plurality of superconducting tape wire materials bundled in a laminated state is inserted into a flexible tube. In addition, Patent Document 1 describes a molding method in which a superconductor is molded into a coil shape, and then a laminated superconducting tape wire material is molded by a mold member made of resin or metal.

### RELATED ART DOCUMENT

### PATENT DOCUMENT

Patent Document 1: Japanese Patent Application Laid-Open No. 2019-102298

### SUMMARY OF THE INVENTION

### PROBLEMS TO BE SOLVED BY THE INVENTION

For example, as an application of a linear material such as an electric wire or a pipe, there is an application in which the linear material is deformed and used, for example, wound around a structural body. In a case where a linear material is used in such an application, it is necessary to prevent damage to the linear material itself due to an external force during winding or a force applied after winding. In addition, a linear material and a protection member that protects the linear material need to be deformable in order to be wound around a structural body. The inventor of the present application have examined a protection member that protects a linear material and prevents damage to the linear material while having a deformable structure.

As a part of the examination on the protection member, for example, a protection member having a structure capable of joining a plurality of linear materials has been examined. If a plurality of linear materials that can be separated from each other can be connected via a protection member, a long linear material can be obtained by linking the plurality of linear materials.

### MEANS FOR SOLVING THE PROBLEMS

A linear material protection member according to an embodiment is a linear material protection member having a plurality of blocks for holding a periphery of a linear material extending in a first direction to surround the periphery of the linear material, and a first wire extending in the first direction and engaged with the plurality of blocks. The linear material has a first linear material including a plurality of first superconducting tape wire materials laminated. The plurality of blocks is sequentially arranged along the first direction. Each of the plurality of blocks includes a holding space for holding the linear material, a roof portion that covers the holding space, a bottom portion located on an opposite side of the roof portion with the holding space interposed between the roof portion and the bottom portion, a first side wall portion that is continuous with each of the roof portion and the bottom portion, and a second side wall portion that is continuous with each of the roof portion and the bottom portion, and is located on an opposite side of the first side wall portion. The plurality of blocks includes a first block and a second block having a shape different from a shape of the first block. The first block includes a first component constituting the roof portion, the first side wall portion, and the second side wall portion, and a second component that is joined to the first component via the first wire and constitutes the bottom portion. The first component includes a first wire holding portion that is formed at any one of a position where the first side wall portion and the bottom portion are combined and a position where the second side wall portion and the bottom portion are combined, and is able to engage with the first wire, and a first fixing portion that is formed at the other of the position where the first side wall portion and the bottom portion are combined and the position where the second side wall portion and the bottom portion are combined, and is able to fix the second component. The second component includes a first side disposed along one of the first side wall portion and the second side wall portion, a second side disposed on an opposite side of the first side, a central region disposed between the first side and the second side in a second direction intersecting with the first direction, a second wire holding portion and a third wire holding portion that are formed along the first side in a state of being able to sandwich the first wire holding portion of the first component, a second fixing portion that is disposed along the second side and is fixable to the first fixing portion of the first component, and a first screw hole that is disposed in the central region and is formed to penetrate the second component in a thickness direction.

According to another embodiment, a linear material protection member protects a first linear material that includes a plurality of first superconducting tape wire materials laminated and extends in a first direction, a second linear material that includes a plurality of second superconducting tape wire materials laminated and extends in the first direction, and a plurality of third superconducting tape wire materials that extends in a second direction intersecting with the first direction and electrically connect the plurality of first superconducting tape wire materials and the plurality of second superconducting tape wire materials. The linear material protection member includes a first block group made of a plurality of blocks for holding the first linear material to surround the first linear material, a second block group made of a plurality of blocks for holding the second linear material to surround the second linear material, a third block for holding a part where the plurality of first superconducting tape wire materials and the plurality of second superconducting tape wire materials are electrically connected via the plurality of third superconducting tape wire materials, so as to surround the part, a first wire that extends in the first direction and is engaged with the first block group and the third block, and a second wire that extends in the first direction and is engaged with the second block group and the third block. The third block includes a first holding space for holding the first linear material, a second holding space for holding the second linear material, a roof portion that covers the first holding space and the second holding space, a first bottom portion located on an opposite side of the roof portion with the first holding space interposed between the roof portion and the first bottom portion, a second bottom portion located on an opposite side of the roof portion with the second holding space interposed between the roof portion and the second bottom portion, a first side wall portion that is continuous with each of the roof portion and the first bottom portion, a second side wall portion that is continuous with each of the roof portion and the second bottom portion and is located on an opposite side of the first side wall portion, a middle wall portion located between the first side wall portion and the second side wall portion, a third holding space that is formed to cause the first holding space and the second holding space to communicate with each other and holds the plurality of third superconducting tape wire materials, a first component that constitutes the roof portion, the first side wall portion, the second side wall portion, and the middle wall portion, a second component that is joined to the first component via the first wire and constitutes the first bottom portion, and a third component that is joined to the first component via the second wire and constitutes the second bottom portion. The first component includes a first wire holding portion that is formed at a position where the first side wall portion and the first bottom portion are combined and that is able to engage with the first wire, a first fixing portion that is formed at a position where the middle wall portion and the first bottom portion are combined and that is able to fix the second component, and a second fixing portion that is formed at a position where the second side wall portion and the second bottom portion are combined, and that is able to fix the third component. The second component includes a first side disposed along the first side wall portion, a second side disposed on an opposite side of the first side, a first central region disposed between the first side and the second side in the second direction, a second wire holding portion and a third wire holding portion formed along the first side in a state of being able to sandwich the first wire holding portion of the first component, a third fixing portion that is disposed along the second side and is fixable to the first fixing portion of the first component, a fourth wire holding portion that is formed at a position where the middle wall portion and the second bottom portion are combined, and that is able to engage with the second wire, and a first screw hole that is disposed in the first central region and is formed to penetrate the second component in a thickness direction. The third component includes a third side disposed along the second side of the second component, a fourth side disposed on an opposite side of the third side, a second central region disposed between the third side and the fourth side in the second direction, a fifth wire holding portion and a sixth wire holding portion formed along the third side in a state of being able to sandwich the second wire holding portion of the second component, a fourth fixing portion that is disposed along the fourth side and is fixable to the second fixing portion of the first component, and a second screw hole that is disposed in the second central region and is formed to penetrate the third component in a thickness direction.

According to still another embodiment, a connection method of a linear material includes a step (a) of preparing a first superconducting wire material including a first laminate made of a plurality of first superconducting tape wire materials laminated, a step (b) of preparing a second superconducting wire material including a second laminate made of a plurality of second superconducting tape wire materials laminated, a step (c) of forming a third laminate by alternately laminating parts of the plurality of first superconducting tape wire materials and parts of the plurality of second superconducting tape wire materials to overlap each other, after the step (a) and the step (b), a step (d) of preparing a first block that is a protection member being able to hold a periphery of the third laminate to surround the periphery of the third laminate, and a step (e) of, after the step (c) and the step (d), inserting a screw into a screw hole formed in the first block and fixing the third laminate in a holding space of the first block by fastening. The first block includes the holding space that is able to hold the third laminate, a roof portion that covers the holding space, a bottom portion located on an opposite side of the roof portion with the holding space interposed between the roof portion and the bottom portion, and the screw hole that penetrates the bottom portion in a thickness direction and communicates with the holding space.

### EFFECTS OF THE INVENTION

According to a representative embodiment of the present invention, it is possible to obtain a linear material protection member that prevents damage to a linear material and is deformable.

### BRIEF DESCRIPTIONS OF THE DRAWINGS

[FIG. 1] is an explanatory view illustrating an example of a structure of a linear material held by a protection member according to an embodiment.
[FIG. 2] is an explanatory view illustrating a state in which a superconducting wire material illustrated in FIG. 1 is held by the protection member according to the embodiment.
[FIG. 3] is a cross-sectional view taken along line A-A illustrated in FIG. 2.
[FIG. 4] is a plan view of a block disposed at an end portion of an arrangement among a plurality of blocks as viewed from a lower surface side.
[FIG. 5] is a perspective view illustrating a state before the block illustrated in FIG. 4 is assembled.
[FIG. 6] is a perspective view illustrating a state in which two components constituting the block illustrated in FIG. 5 are assembled.
[FIG. 7] is a cross-sectional view taken along line B-B in FIG. 2.
[FIG. 8] is a perspective view illustrating a state before a block illustrated in FIG. 7 is assembled.
[FIG. 9] is a perspective view illustrating a state in which two components constituting the block illustrated in FIG. 7 are assembled.
[FIG. 10] is a cross-sectional view taken along line C-C in FIG. 2.
[FIG. 11] is a perspective view illustrating an example of a case where a superconducting wire material is used as a coil.
[FIG. 12] is a perspective view illustrating an example of a block that protects a part connecting superconducting wire materials in parallel among a plurality of blocks applied to the coil illustrated in FIG. 11.
[FIG. 13] is a cross-sectional view taken along line D-D in FIG. 12.
[FIG. 14] is a cross-sectional view taken along line E-E in FIG. 12. FIG. 5 is a perspective view illustrating one of the two blocks illustrated in FIG. 12.
[FIG. 15] is a perspective view illustrating a state before a block illustrated in FIG. 13 is assembled.
[FIG. 16] is a perspective view illustrating a state in which three components constituting the block illustrated in FIG. 13 are assembled.
[FIG. 17] is a plan view of the block illustrated in FIG. 16 as viewed from a bottom portion side.
[FIG. 18] is a perspective view illustrating a state in which the superconducting wire material illustrated in FIG. 12 is turned upside down and a plurality of wire materials and a bottom portion are removed.
[FIG. 19] is a cross-sectional view illustrating a modification example of FIG. 10.
[FIG. 20] is a cross-sectional view illustrating a modification example of FIG. 3.
[FIG. 21] is an explanatory view illustrating an example of a step flow of a connection method of a superconducting wire material.
[FIG. 22] is an enlarged cross-sectional view illustrating a linear material after being connected by the connection method of a superconducting wire material illustrated in FIG. 21.
[FIG. 23] is an explanatory view illustrating an example of a structure of a superconducting tape wire material illustrated in FIG. 22.
[FIG. 24] is an enlarged cross-sectional view illustrating an enlarged part of a laminate illustrated in FIG. 22.

### DETAILED DESCRIPTION OF PREFERRED EMBODIMENTS

The inventor of the present application has conducted research and development of a nuclear fusion reactor in which a nuclear fusion reaction is performed by confining high-temperature and high-density plasma in a furnace. As a part of this, the use of a high-temperature superconducting tape wire material as a material of a coil that generates a magnetic field for confining plasma in a furnace has been examined. The technique described below is a technique that can be used as a protection member for various linear materials such as an electric wire and a pipe in addition to a high-temperature superconductor. Hereinafter, an embodiment in a case where the technique is applied to a protection member that protects a high-temperature superconductor will be described. In the following description, a "linear material" and a "linear material protection member" that protects the "linear material" will be described separately. A wire to be engaged with a plurality of blocks of the protection member will be described as a component included in the "linear material protection member". In addition, in the following description, change of a superconductor from a superconducting state to a normal conducting state may be referred to as "quenching".

### <Superconducting Wire Material>

In the present application, a superconductor exhibiting superconductivity at 77 K or higher is referred to as a high-temperature superconductor. Hereinafter, this material is simply referred to as a "superconductor", a "superconductor layer", a "superconducting tape wire material", or a "superconducting wire material", but in any case, this material is a material containing a high-temperature superconductor. The superconducting tape wire material (specifically, a high-temperature superconducting tape wire material) is a tape material in which a superconductor layer (specifically, a high-temperature superconductor layer) is formed on a tape that is made of metal and has a thickness of about 100 micrometers. In a case where the superconducting tape wire material is used as, for example, a coil, a plurality of superconducting tape wire materials is laminated and bundled to form a superconducting wire material (specifically, a high-temperature superconducting wire material), and a superconducting coil (specifically, a high-temperature superconducting coil) is formed by molding the superconducting wire material into a coil shape. In addition, for example, in a case where it is necessary to generate a strong magnetic field like a coil used in a nuclear fusion reactor or a high-energy particle accelerator, a laminated coil in which a plurality of superconducting wire materials is wound so as to be laminated may be used.

The superconducting wire material includes, for example, a flexible tube that bundles laminated superconducting tape wire materials. The flexible tube is formed, for example, by winding a metal band around a laminated superconducting tape wire material. In addition, as described in Patent Document 1 described above, in a case where a superconducting wire material is molded and then laminated superconducting tape wire materials are molded by a mold member made of a resin or a low-melting-point metal, the strength can be improved as compared with a single superconducting tape wire material.

However, according to the examination of the inventor of the present application, in a case where the superconducting wire material is formed into a complicated shape, an external force to be applied to the superconducting wire material or stress generated in the superconducting wire material is large, and thus, it is necessary to further improve the strength. For example, in the case of a coil used in a helical nuclear fusion reactor, the superconducting wire material is wound in a coil shape so as to be twisted. Thus, a strong force is easily applied during winding work, and the stress generated in the superconducting wire material increases. In addition, after the superconducting wire material is formed into a coil shape, a strong external force may be applied to the superconducting wire material. For example, in a case where a large current flows through the superconducting coil, a strong external force such as a Lorentz force may be applied to the superconducting wire material due to a magnetic field generated around the coil. Thus, a protection member capable of preventing damage to the superconducting wire material is required.

On the other hand, for example, in a case where the superconducting wire material is accommodated in a pipe made of metal, in order to prevent damage to the superconducting wire material, the superconducting wire material can be protected, but processing such as bending is difficult.

The technique described below can be applied to various applications as described above, and is a particularly effective technique when being applied to a protection member that protects a superconducting wire material used for a molded body such as a superconducting coil. In addition, a technique that is particularly effective in the case of laminating a plurality of superconducting wire materials will also be described below.

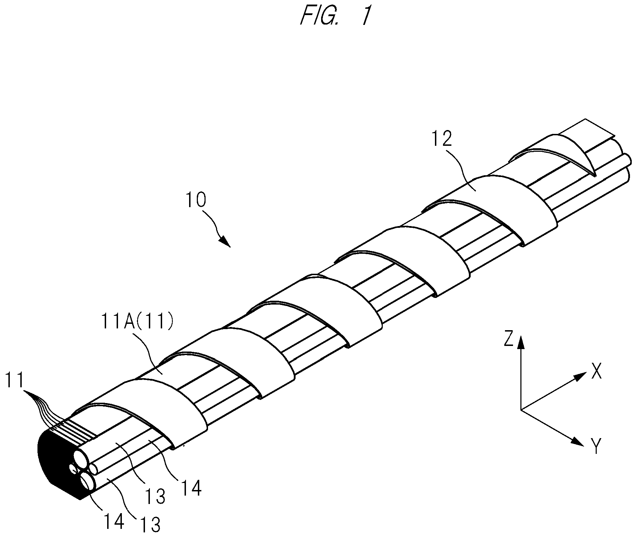

FIG. 1 is an explanatory view illustrating an example of a structure of a linear material held by a protection member according to an embodiment. As illustrated in FIG. 1, a linear material in the present embodiment is a superconducting wire material 10 including a plurality of superconducting tape wire materials 11 laminated and a metal band 12 wound around a laminate 11A of the plurality of superconducting tape wire materials 11. FIG. 1 illustrates a state in which 152 superconducting tape wire materials 11 are laminated, and the number of laminated superconducting tape wire materials is not limited to the example illustrated in FIG. 1, and can be determined according to the size of a coil or the specification of a value of a current flowing through the coil. For example, as a modification example of the present embodiment, the number of laminated superconducting tape wire materials 11 of the laminate 11A may be 151 or less or 153 or more.

The superconducting tape wire material 11 is a tape wire material in which a superconductor layer (specifically, a high-temperature superconductor layer) is formed on a metal tape of about several tens of µm. In the example illustrated in FIG. 1, the thickness of the superconducting tape wire material 11 is about 0.1 mm, and the width of the superconducting tape wire material 11 is about 12 mm. The thickness and the width of the superconducting tape wire material 11 are examples, and various modification examples can be applied. The plurality of superconducting tape wire materials 11 is laminated in a state of not being bonded to each other and being capable of being shifted from each other. As a result, the superconducting wire material 10 that is the laminate 11A of the plurality of superconducting tape wire materials 11 can be molded into, for example, a coil shape or the like. Note that, although not illustrated, as a modification example of FIG. 1, a laminate 11A of a plurality of superconducting tape wire materials 11 may be bound by using a wire or the like (not illustrated). In this case, handleability of the laminate 11A is improved. On the other hand, from the viewpoint of improving the degree of freedom of movement of a plurality of superconducting tape wire materials 11 in a tube made of the metal band 12, it is preferable that the laminate 11A of the plurality of superconducting tape wire materials 11 is not bound as in the present embodiment.

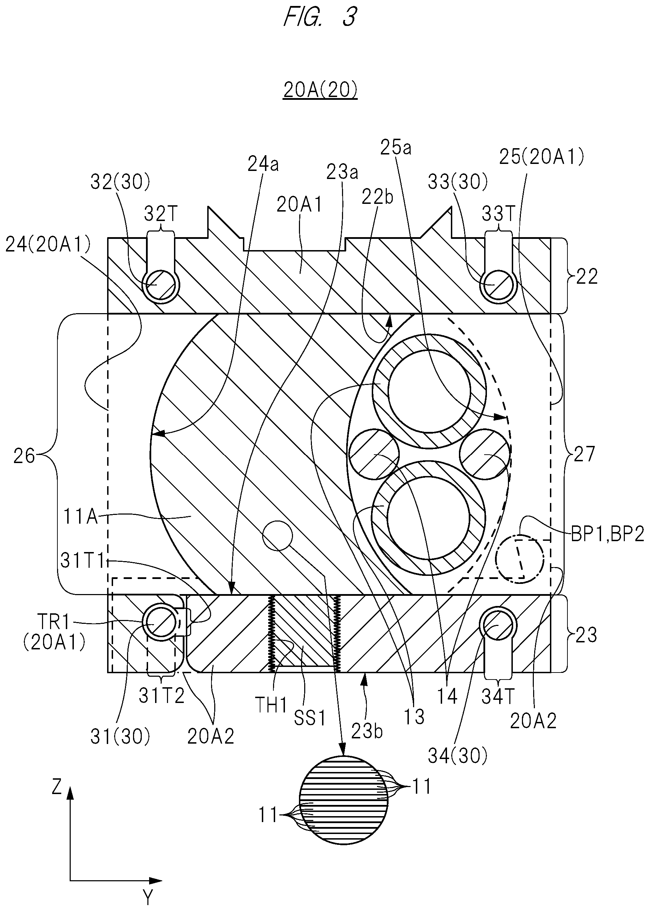

The laminate 11A of the plurality of superconducting tape wire materials 11 is inserted into the metal band 12 molded into a tubular shape. In the example illustrated in FIG. 1, the thickness of the metal band 12 is, for example, about 100 µm to several hundred µm, and the width is about 3 to 5 mm. In addition, in a cross-sectional view illustrated in FIG. 3 which will be described later, the metal band 12 is molded to have a cylindrical shape. A structural body constituted by the metal band 12 may be referred to as a tube below. The tube has an outer diameter of, for example, 23 mm and an inner diameter of, for example, 22 mm. Although the tube is a metal cylindrical body, the tube can be molded into a coil shape with such a thickness. The metal band 12 functions as a binding member that binds the laminate 11A of the plurality of superconducting tape wire materials 11 so as not to scatter. However, each of the plurality of superconducting tape wire materials 11 can move freely to some extent in the tube formed by the metal band 12.

In the example illustrated in FIG. 1, the shape of the metal band 12 surrounding the periphery of the laminate 11A is a spring shape, and a gap is provided between the adjacent metal bands 12. As will be described later, in a case where the laminate 11A of the plurality of superconducting tape wire materials 11 is molded by a mold member after the superconducting wire material 10 is molded into a coil shape, an opening portion for introducing the mold member into the tube of the metal band 12 is required. In a case where a gap is provided between the adjacent metal bands 12 as illustrated in FIG. 1, a mold member can be introduced from the gap to mold the laminate 11A of the plurality of superconducting tape wire materials 11.

However, as a modification example of FIG. 1, the metal bands 12 may be wound so as to partially overlap each other. In this case, in a case where the laminate 11A of the plurality of superconducting tape wire materials 11 is molded, it is preferable to provide an opening portion for introducing the mold member at one place or a plurality of places of the tube made of the metal bands 12.

As illustrated in FIG. 1, in the superconducting wire material 10, a cooling pipe 13 and a spacer 14 are disposed adjacent to the laminate 11A of the superconducting tape wire materials 11. In the example illustrated in FIG. 1, a plurality of (two in FIG. 1) cooling pipes 13 and a plurality of (two in FIG. 1) spacers 14 are disposed adjacent to the laminate 11A of the plurality of superconducting tape wire materials 11.

The cooling pipe 13 is a pipe serving as a flow path of a refrigerant, and is disposed along the laminate 11A of the plurality of superconducting tape wire materials 11. Liquid hydrogen or gaseous helium having a temperature of, for example, about 20 K (Kelvin) flows in the cooling pipe 13 as the refrigerant. The cooling pipe 13 has an outer diameter of, for example, 8 mm, and an inner diameter of, for example, 7 mm. The wall thickness of the cooling pipe 13 is 1 mm. With such a thickness, even if the cooling pipe 13 is a pipe made of metal, it can be deformed following the shape of the superconducting wire material 10. Note that, from the viewpoint of improving the flexibility of the cooling pipe 13, a bellows-shaped pipe may be used. As in the present embodiment, since the cooling pipe 13 is disposed adjacent to the laminate 11A of the superconducting tape wire materials 11, it is possible to improve the cooling efficiency of the superconducting tape wire material 11.

The spacer 14 is, for example, a wire. The spacer 14 is provided in order to prevent a positional relationship between the laminate 11A of the superconducting tape wire materials 11 and each of a plurality of cooling pipes 13 from deviating in the tube made of the metal bands 12.

The spacer 14 is made of, for example, copper. The spacer 14 may be in contact with the superconducting tape wire material 11. Therefore, it is preferable to use a wire made of copper as the spacer 14 so as not to impair the electrical characteristics of the superconducting tape wire material 11.

The spacer 14 that is a wire has a wire diameter of, for example, about 2 mm to 3 mm. In the example illustrated in FIG. 1, one spacer 14 is disposed in a space surrounded by two cooling pipes 13 and the laminate 11A of the superconducting tape wire materials 11, and one spacer 14 is disposed in a space surrounded by two cooling pipes 13 and the metal band 12.

However, various modification examples can be applied to the number and the line shape of the spacers 14 according to the position of the space formed in the tube or the cross-sectional area. For example, in a case where a gap is formed between the metal band 12 and the laminate 11A of the superconducting tape wire materials 11, the spacer 14 can be inserted into the gap.

Similarly, there are various modification examples in the presence or absence and the number of cooling pipes 13. For example, in the case of a small superconducting wire material in which the number of laminated superconducting tape wire materials 11 is about 30, there is a case where the cooling pipe 13 is not provided. In addition, there is a case where the number of cooling pipes 13 is one, or a case where the number of cooling pipes 13 is three or more.

Each of the laminate 11A of the superconducting tape wire materials 11, the cooling pipe 13, and the spacer 14 is inserted into the metal band 12 molded into a tubular shape. Since two cooling pipes 13 and two spacers 14 are disposed in the tube, the laminate 11A of the superconducting tape wire materials 11 has a cross-sectional shape in which one side surface of the laminate 11A is along the inner wall of the tube. Since each of the plurality of superconducting tape wire materials 11 is laminated in a state of not being bonded to each other and being capable of being shifted from each other, it is possible to deform the superconducting tape wire materials into a shape as illustrated in FIG. 1 without particularly molding the superconducting tape wire materials in advance.

There is also a method in which the superconducting wire material 10 illustrated in FIG. 1 is directly wound around a core material of a coil to form a coil shape. However, according to the examination of the inventor of the present application, it has been found that in a case where the superconducting wire material 10 is directly wound around the core material of the coil, the superconducting wire material 10 may be damaged during winding work. In addition, it has been found that in a case where the superconducting wire materials 10 are wound around the core material of the coil in a plurality of layers, the positions of the laminated superconducting wire materials 10 may be shifted.

Therefore, the inventor of the present application has examined a protection member for protecting the superconducting wire material 10. Functions required for the protection member are as follows. First, when the superconducting wire material 10 is molded (for example, into a coil shape), the protection member itself needs to be deformable. Secondly, it is necessary to have a structure capable of preventing damage to the superconducting wire material 10 when the superconducting wire material 10 is molded (for example, into a coil shape). In addition, in a case where the superconducting wire material 10 is wound in a plurality of layers, it is preferable that the position shift of the laminated superconducting wire materials 10 can be prevented. In addition, in a case where the superconducting wire material 10 is attached to a protection member, it is preferable that the superconducting wire material 10 is easily attached. In addition, a large current flows through the superconducting wire material 10. At this time, it is preferable to have a structure in which the constituent components of the protection member are hardly damaged due to an influence of an electromagnetic force generated around the superconducting wire material 10.

### <Protection Member>

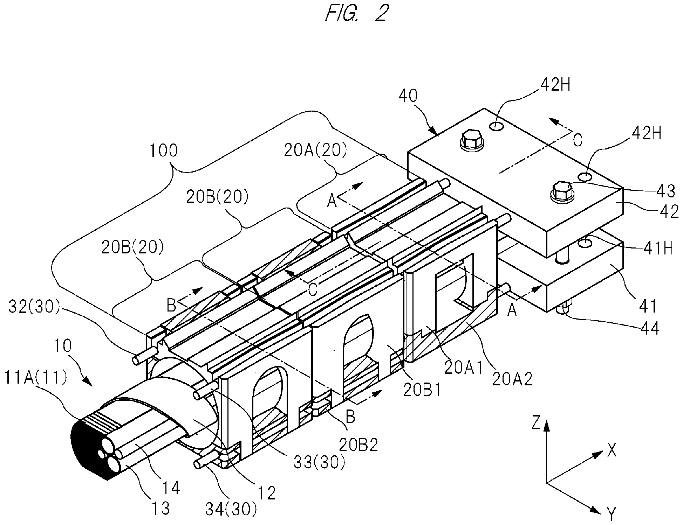

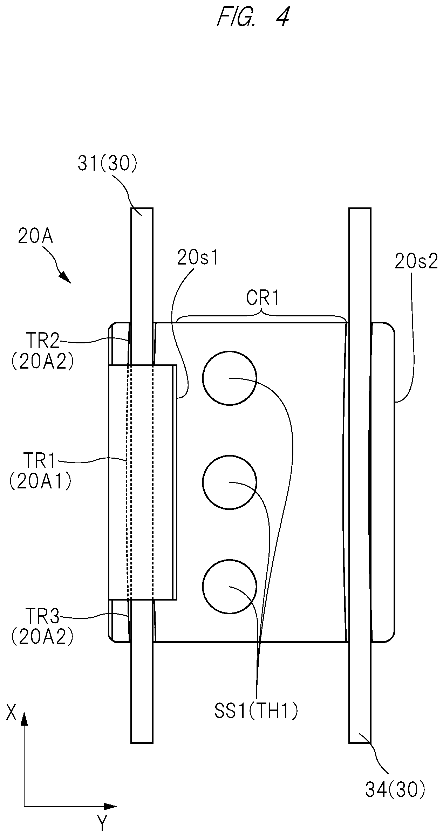

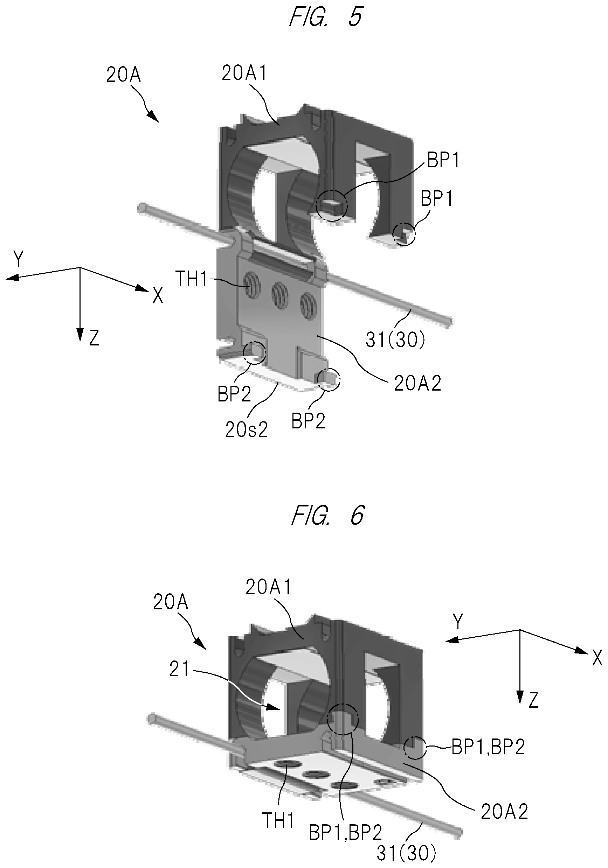

FIG. 2 is an explanatory view illustrating a state in which the superconducting wire material illustrated in FIG. 1 is held by the protection member according to the present embodiment. FIG. 2 is a perspective view, in which a component 20A2 and a component 20B2 are hatched in order to clearly indicate boundaries between components constituting the protection member. FIG. 3 is a cross-sectional view taken along line A-A of FIG. 2. FIG. 4 is a plan view of a block disposed at an end portion of an arrangement among a plurality of blocks as viewed from a lower surface side. FIG. 5 is a perspective view illustrating a state before the block illustrated in FIG. 4 is assembled. FIG. 6 is a perspective view illustrating a state in which two components constituting the block illustrated in FIG. 5 are assembled. FIGS. 5 and 6 illustrate only a wire 31 contributing to joining between the component 20A1 and the component 20A2 among a plurality of wires 30 illustrated in FIG. 3. In the case of the present embodiment, in addition to the wire 31 illustrated in FIGS. 5 and 6, wires 32, 33, and 34 illustrated in FIG. 3 are engaged with a block 20A.

Description will be made below on the assumption that an extending direction of the superconducting wire material 10 illustrated in FIG. 2 is referred to as an X direction, a direction intersecting with the X direction in a plan view (a direction perpendicular to the X direction in the example illustrated in FIG. 2) is referred to as a Y direction, and a normal direction (may be referred to as a thickness direction) of an X-Y plane including the X direction and the Y direction is referred to as a Z direction.

As illustrated in FIG. 2, a protection member 100 in the present embodiment includes a plurality of blocks 20 for holding the periphery of the superconducting wire material 10 that is a linear material, so as to surround the periphery thereof, and a wire 30 engaged with the plurality of blocks 20. In the present embodiment, the protection member 100 includes four wires 30 as illustrated in FIG. 3. As illustrated in FIG. 3, the four wires 30 include a wire 31, a wire 32, a wire 33, and a wire 34. Each of the plurality of wires 30 is made of metal. As a metal material constituting the wire 30, for example, so-called stainless steel (for example, SUS304 or the like), titanium (Ti), a titanium alloy, or the like can be exemplified. The wire diameter of the wire 30 is, for example, about 2 mm.

The protection member 100 in the present embodiment can be divided into a plurality of blocks 20, and has a structure in which a plurality of blocks 20 is joined via the wires 30. Therefore, when the protection member 100 (in other words, the linear material with a protection member) in a state of holding the superconducting wire materials 10 is wound around, for example, a core material of a coil, a gap can be generated at boundaries between the plurality of blocks 20 as necessary. As a result, the protection member 100 can be deformed and wound around a structural body such as a core material. In other words, the plurality of blocks 20 is deformable structures like a spine.

The wire 30 functions as a reinforcing member for suppressing damage to the superconducting wire material 10 due to a pulling force when the superconducting wire material 10 accommodated in the protection member 100 is wound around a core material of a coil, for example. Therefore, the wire 30 is disposed to extend in the same direction (in the case of FIG. 2, the X direction) as the extending direction of the superconducting wire material. Although at least one wire 30 may be provided, it is preferable that a plurality of wires 30 is provided as illustrated in FIG. 2 from the viewpoint of increasing the reinforcing strength of the superconducting wire materials 10.

As illustrated in FIG. 3, each of the plurality of blocks 20 includes a holding space 21 (see FIG. 6) for holding the superconducting wire materials 10, a roof portion 22 that covers the holding space 21, a bottom portion 23 located on the opposite side of the roof portion 22 with the holding space 21 interposed between the roof portion 22 and the bottom portion 23, a side wall portion 24 that is continuous with each of the roof portion 22 and the bottom portion 23, and a side wall portion 25. The side wall portion 25 is located on the opposite side of the side wall portion 24 with the holding space 21 interposed between the side wall portion 24 and the side wall portion 25 (see FIG. 6).

Each of the roof portion 22, the bottom portion 23, the side wall portion 24, and the side wall portion 25 is made of a metal material. As the metal material forming the roof portion 22, the bottom portion 23, and the side wall portion 24, for example, titanium (Ti), a titanium alloy, or the like can be exemplified. In particular, in the case of a protection member for a linear material through which a large current flows, such as the superconducting wire material 10, a non-magnetic material is preferable. In consideration of characteristics such as hardness, workability, and nonmagnetism of the material, the roof portion 22, the bottom portion 23, the side wall portion 24, and the side wall portion 25 can also be formed by using stainless steel (for example, SUS304 or the like) in addition to the titanium alloy described above.

The protection member 100 includes a plurality of types of blocks 20 having different shapes. In the example illustrated in FIG. 2, the protection member 100 includes a block 20A and a block 20B having a shape different from the shape of the block 20A. Although details will be described later, the block 20A has a structure in which the laminate 11A of the superconducting tape wire materials 11 and a lead portion 40 are easily connected. On the other hand, the block 20B has a simple structure that is easily wound around the superconducting wire material 10.

Therefore, among a plurality of blocks 20 arranged along the X direction, the block 20A is disposed at the end portion of the arrangement. Note that, in the example illustrated in FIG. 2, only the block 20 disposed at the end portion of the arrangement is the block 20A, and the others are the blocks 20B. However, the block 20A is not limited to being disposed only at the end portion of the arrangement, and a plurality of blocks 20A may be disposed continuously along the X direction in addition to the end portion of the arrangement.

### <Block 20A>

First, the structure of the block 20A illustrated in FIG. 2 will be described. As illustrated in FIG. 3, the block 20A includes a component 20A1 constituting the roof portion 22, the side wall portion 24, and the side wall portion 25, and a component 20A2 that is joined to the component 20A1 via the wire 31 and constitutes the bottom portion 23.

The component 20A1 includes a wire holding portion TR1 capable of engaging with the wire 31, and a fixing portion BP1 (see FIG. 5) that is able to fix the component 20A2. The wire holding portion TR1 is formed at one of a position where the side wall portion 24 and the bottom portion 23 are combined and a position where the side wall portion 25 and the bottom portion 23 are combined. In the example illustrated in FIG. 3, the wire holding portion TR1 is formed at an end portion of the side wall portion 24 (the position where the side wall portion 24 and the bottom portion 23 are combined). The fixing portion BP1 is formed at the other of the position where the side wall portion 24 and the bottom portion 23 are combined and the position where the side wall portion 25 and the bottom portion 23 are combined. In the example illustrated in FIG. 3, the fixing portion BP1 is formed at an end portion of the side wall portion 25 (the position where the side wall portion 25 and the bottom portion 23 are combined).

As illustrated in FIG. 4, the component 20A2 includes a side 20s1, a side 20s2, a central region CR1, a wire holding portion TR2, a wire holding portion TR3, a fixing portion BP2 (see FIG. 5), and a screw hole TH1.

Each of the side 20s1 and the side 20s2 extends along the X direction. The side 20s1 is disposed along one of the side wall portion 24 (see FIG. 3) and the side wall portion 25 (see FIG. 3). In the example illustrated in FIG. 4, the side 20s1 is disposed along the side wall portion 24 (see FIG. 3). The side 20s2 is disposed on the opposite side of the side 20s1. In plan view, the central region CR1 is disposed between the side 20s1 and the side 20s2. Specifically, in the Y direction intersecting with the X direction (perpendicular in FIG. 4), the central region CR1 is disposed between the side 20s1 and the side 20s2.

Each of the wire holding portion TR2 and the wire holding portion TR3 extends along the X direction. Each of the wire holding portion TR2 and the wire holding portion TR3 is formed in a state where the wire holding portion TR1 of the component 20A1 can be sandwiched along the side 20s1. In other words, in the X direction, the wire holding portion TR1 of the component 20A1 is sandwiched between the wire holding portion TR2 and the wire holding portion TR3.

The fixing portion BP2 illustrated in FIG. 5 is disposed along the side 20s2. In the case of the present embodiment, a structure in which, as illustrated in FIGS. 5 and 6, by combining the fixing portion BP2 (see FIG. 5) that is a convex portion and the fixing portion BP1 (see FIG. 6) that is a concave portion, the fixing portion BP1 and the fixing portion BP2 are adhered to each other and fixed is made. Such a fixing method may be referred to as "crimping" below, and a part fixed by crimping may be referred to as a crimped portion below.

Note that the method of fixing the fixing portion BP1 and the fixing portion BP2 is not limited to the crimping method, and there are various modification examples. For example, a method of fixing by welding can be exemplified.

The screw hole TH1 is disposed in the central region CR1 and is formed to penetrate the component 20A2 in the thickness direction. As illustrated in FIG. 3, a screw SS1 is inserted into the screw hole TH1. In the example illustrated in FIG. 3, one end portion of the screw SS1 is in contact with the laminate 11A of the superconducting tape wire materials 11. In the case of the present embodiment, the block 20A provided at the end portion of the arrangement of the plurality of blocks 20 can fix the laminate 11A with the screw SS1.

In the case of a structure in which the laminate 11A of the superconducting tape wire materials 11 can be fixed by the screw SS1, the protection member is particularly suitable as a protection member disposed at a joint of the superconducting wire material 10 or a part connected to the lead portion 40 illustrated in FIG. 2. This is because, in a case where a long superconducting wire material 10 is intended to be obtained by joining a plurality of superconducting wire materials 10, the electrical characteristics of the superconducting wire material 10 are easily maintained by fixing the laminate 11A at a place where the superconducting wire materials 10 are joined. Details of a method for joining the superconducting wire materials 10 will be described later.

The screw SS1 is a hexagon screw (also referred to as a set screw) having no screw thread. Therefore, the entire screw SS1 can be buried in the screw hole TH1. The screw SS1 does not protrude from the lower end of the screw hole TH1. In other words, the screw SS1 does not protrude from a lower surface 23b of the bottom portion 23.

In a case where a coil is formed by the superconducting wire materials 10 illustrated in FIG. 2, the superconducting wire materials 10 in a state of being protected by the protection member 100 may be laminated. At this time, from the viewpoint of preventing interference between the protection member 100 disposed in the upper stage and the protection member 100 disposed in the lower stage, it is preferable to reduce the number of protruding parts from the protection member.

In the case of the present embodiment, a structure where the superconducting wire materials 10 are easily laminated is obtained by using a hexagon screw as the screw SS1.

In addition, in order to easily fix the laminate 11A with the screw SS1, the block 20A preferably has the following structure. That is, each of an inner side surface 24a of the side wall portion 24 and an inner side surface 25a of the side wall portion 25, which are included in the component 20A1 of the block 20A illustrated in FIG. 3, has an arc shape in side view in the X direction (see FIG. 2). An upper surface 23a of the bottom portion 23 of the block 20A is a flat surface. In addition, a lower surface 22b of the roof portion 22 of the block 20A is a flat surface.

In other words, a surface (upper surface 23a) of the bottom portion 23 of the block 20A, which is in contact with the laminate 11A of the superconducting tape wire materials 11, and a surface (lower surface 22b) of the roof portion 22 of the block 20A, which is in contact with the laminate 11A of the superconducting tape wire materials 11, are flat surfaces. In this case, it is possible to improve the adhesion between the laminate 11A and the lower surface 22b and the adhesion between the laminate 11A and the upper surface 23a.

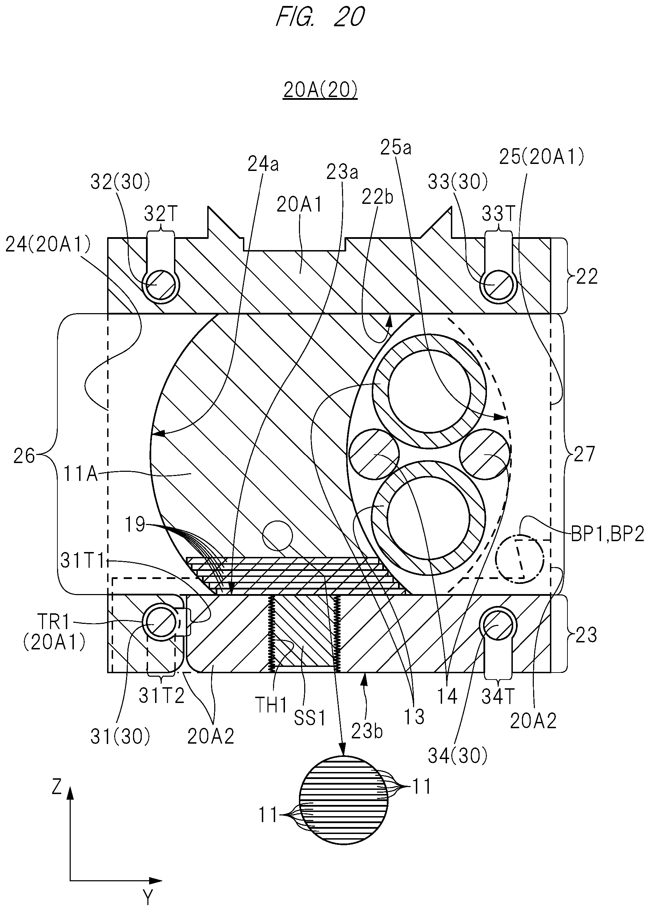

In addition, as illustrated in FIG. 20 which will be described later as a modification example, a metal plate 19 may be disposed on the upper surface 23a of the bottom portion 23. In this case, the screw SS1 inserted into the screw hole TH1 is in contact with the metal plate 19. According to this modification example, it is possible to avoid direct contact of the screw SS1 with the superconducting tape wire material 11. Therefore, it is preferable from the viewpoint that damage to the superconducting tape wire material 11 can be suppressed even in a case where the superconducting tape wire material is strongly tightened by the screw in S1.

In addition, as illustrated in FIG. 3, each of the side wall portion 24 and the side wall portion 25 included in the component 20A1 of the block 20A has an opening portion that penetrates the side wall portion 24 or the side wall portion 25 in the Y direction. Specifically, the side wall portion 24 has an opening portion 26 that penetrates the side wall portion 24 in the Y direction. In addition, the side wall portion 25 has an opening portion 27 that penetrates the side wall portion 25 in the Y direction.

Providing the opening portion 26 or the opening portion 27 has the following advantages. That is, since the opening portion 26 is formed, the side wall portion 24 forms an arch shape. Similarly, since the opening portion 27 is formed, the side wall portion 25 forms an arch shape. In this case, it is possible to improve the strength of the side wall portion 24 and the side wall portion 25 against an external force applied in the Z direction illustrated in FIG. 3.

Alternatively, as illustrated in FIG. 3, in a case where the superconducting wire material 10 includes the cooling pipe 13 and the like in addition to the laminate 11A of the superconducting tape wire materials 11, the cooling pipe 13 may be drawn out in a direction different from the extending direction of the laminate 11A. At this time, the opening portion 26 and the opening portion 27 can be used as a path for drawing out the cooling pipe 13. In other words, since the opening portion 26 and the opening portion 27 are provided, it is possible to improve the degree of freedom in the layout of the cooling pipe 13.

Alternatively, in a case where the superconducting wire material 10 is used as a coil, after the superconducting wire material 10 is formed into a coil shape in a state where the protection member 100 is attached, the superconducting wire material 10 may be sealed with a sealing material in order to prevent positional shift of the superconducting wire material 10. In this case, in a case where the opening portion 26 and the opening portion 27 are provided, these opening portions can be used as a supply path of the sealing material. In other words, since the opening portion 26 and the opening portion 27 are provided, it is possible to easily supply the sealing material for sealing the superconducting wire material 10. The sealing material may be made of metal in addition to a case of being made of resin.

A groove for inserting the wire 30 is formed in at least one of the roof portion 22, the bottom portion 23, the side wall portion 24, and the side wall portion 25 illustrated in FIG. 3. In the example illustrated in FIG. 3, since the four wires 30 are engaged, a groove for inserting each of the four wires 30 is formed.

Specifically, a groove 31T1 and a groove 31T2 into which the wires 31 can be inserted are formed in a region where the bottom portion 23 and the side wall portion 24 intersect with each other. The groove 31T1 is a groove provided in the component 20A1, and has an opening portion facing the component 20A1. The groove 31T1 communicates with the wire holding portion TR1 at the bottom of the groove. The groove 31T2 is a groove provided in the component 20A2, and has an opening portion on the lower surface of the bottom portion 23. The groove 31T2 communicates with the wire holding portion TR2 (see FIG. 4) or the wire holding portion TR3 (see FIG. 4) at the bottom of the groove. As illustrated in FIG. 3, by inserting the wires 31 from the groove 31T1 and the groove 31T2 having opening portions facing different directions, the component 20A1 and the component 20A2 can be joined via the wires 31 held by the wire holding portions TR1, TR2, and TR3.

In a region where the roof portion 22 and the side wall portion 24 intersect with each other, a groove 32T into which the wire 32 can be inserted is formed. In a region where the roof portion 22 and the side wall portion 25 intersect with each other, a groove 33T into which the wire 33 can be inserted is formed. In a region where the bottom portion 23 and the side wall portion 25 intersect with each other, a groove 34T into which the wire 34 can be inserted is formed.

The superconducting wire material 10 is wound around the core material of the coil while being held by the protection member 100. During this work, the superconducting wire material 10 is reinforced by the plurality of wires 30, so that it is possible to prevent or suppress damage to the superconducting wire material 10 due to an external force during this work.

### <Block 20B>

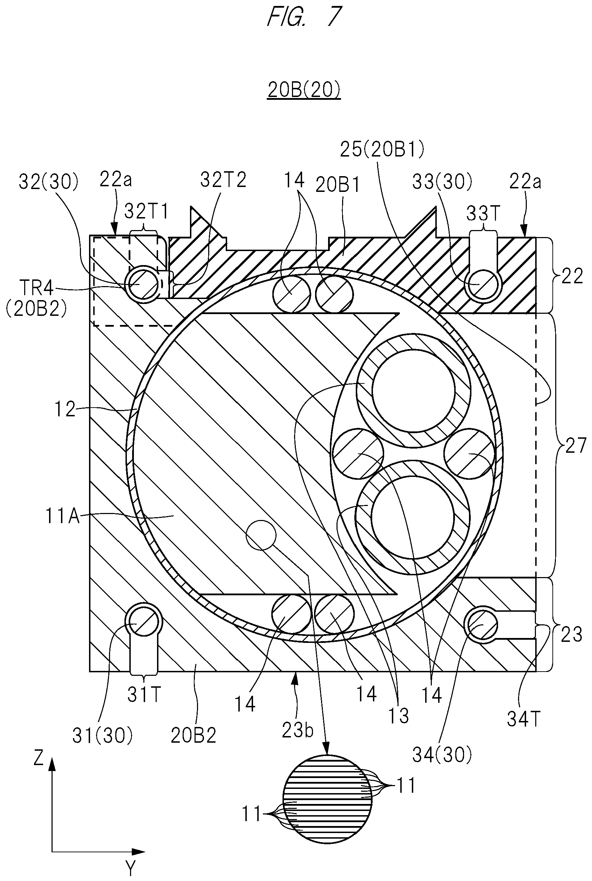

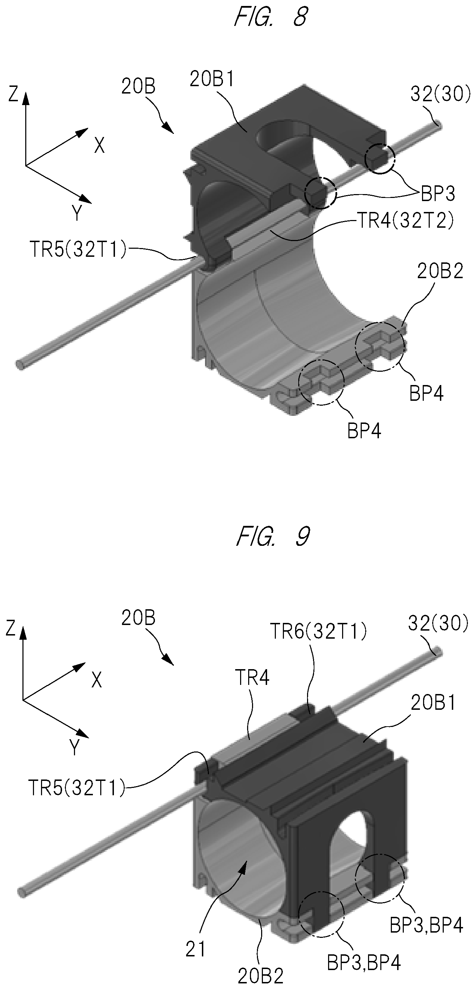

Next, the structure of the block 20B illustrated in FIG. 2 will be described. FIG. 7 is a cross-sectional view taken along line B-B in FIG. 2. FIG. 8 is a perspective view illustrating a state before the block illustrated in FIG. 7 is assembled. FIG. 9 is a perspective view illustrating a state in which two components constituting the block illustrated in FIG. 7 are assembled. FIGS. 8 and 9 illustrate only a wire 32 contributing to joining between a component 20B1 and a component 20B2 among a plurality of wires 30 illustrated in FIG. 7. In the case of the present embodiment, in addition to the wire 32 illustrated in FIGS. 8 and 9, wires 31,33, and 34 illustrated in FIG. 7 are engaged.

As described above, the block 20A illustrated in FIGS. 3 to 6 is excellent in that the laminate 11A of the superconducting tape wire material 11 can be fixed by the screw SS1. On the other hand, from the viewpoint of ease of assembly of the block 20A, a simple structure that does not require fixing with the screw SS1 is preferable.

As illustrated in FIG. 2, the protection member 100 further includes the wire 32 that extends along the X direction and is engaged with the plurality of blocks 20.

As illustrated in FIG. 7, the block 20B includes a component 20B1 constituting the roof portion 22 and the side wall portion 24, and a component 20B2 constituting the bottom portion 23 and the side wall portion 25. In the case of the present embodiment, the block 20B includes the component 20B1 and the component 20B2.

As illustrated in FIGS. 8 and 9, the component 20B1 includes a wire holding portion TR5 and a wire holding portion TR6 (see FIG. 9) formed along the X direction in a state where a wire holding portion TR4 of the component 20B1 can be sandwiched, and a fixing portion BP3 that is able to fix the component 20B2.

The component 20B2 includes a wire holding portion TR4 capable of engaging with the wire 32, and a fixing portion BP4 that is fixable to the fixing portion BP3 of the component 20B1. The wire holding portion TR4 is formed at one of a position where the side wall portion 24 (see FIG. 7) and the roof portion 22 (see FIG. 7) are combined and a position where the side wall portion 25 (see FIG. 7) and the bottom portion 23 (see FIG. 7) are combined. The fixing portion BP3 is formed at the other of the position where the side wall portion 24 and the roof portion 22 are combined and the position where the side wall portion 25 and the bottom portion 23 are combined. In the case of the present embodiment, the wire holding portion TR4 is formed at the position where the side wall portion 24 and the roof portion 22 are combined, and the fixing portion BP3 is formed at the position where the side wall portion 25 and the bottom portion 23 are combined.

In the case of the block 20B, the screw hole TH1 provided in the block 20A illustrated in FIG. 3 is not provided. In other words, the block 20B does not have a function of fixing the laminate 11A of the superconducting tape wire materials 11, and is simply attached to cover the periphery of the superconducting wire materials 10 (see FIG. 1). The block 20B can be assembled by fewer procedures than the block 20A illustrated in FIG. 3. Thus, by providing the block 20B as the block 20 provided in the middle of the arrangement of the plurality of blocks 20, it is possible to improve the assembly efficiency.

In addition, as illustrated in FIG. 9, a holding space 21 of the block 20B has a columnar shape in a side view in the X direction. As illustrated in FIG. 1, a metal band having a cylindrical tube shape can be easily accommodated in the holding space 21 of the block 20B.

As illustrated in FIG. 7, the laminate 11A is not in contact with the component 20B1 and the component 20B2 of the block 20B. There is a gap between the laminate 11A and the metal band 12. Therefore, in the case of the example illustrated in FIG. 7, the metal band 12 and the spacer 14 are disposed between the roof portion 22 and the laminate 11A in the Z direction. Similarly, the metal band 12 and the spacer 14 are disposed between the bottom portion 23 and the laminate 11A in the Z direction. Specifically, the spacer 14 is disposed between the metal band 12 and the laminate 11A in the Z direction.

Each of the wires 31,32,33, and 34 is engaged with the block 20B. Therefore, similarly to the block 20A, a groove for inserting each of the four wires 30 is formed in the block 20B.

Specifically, a groove 32T1 and a groove 32T2 into which the wires 32 can be inserted are formed in a region where the roof portion 22 and the side wall portion 24 intersect with each other. The groove 32T1 is a groove provided in the component 20B1, and has an opening portion on the upper surface 22a of the roof portion 22. The groove 32T1 communicates with the wire holding portion TR5 (see FIG. 9) or the wire holding portion TR6 (see FIG. 9) at the bottom of the groove. The groove 32T2 is a groove provided in the component 20B2, and has an opening portion facing the component 20B1. The groove 31T2 communicates with the wire holding portion TR4 at the bottom of the groove. As illustrated in FIG. 7, by inserting the wires 32 from the groove 32T1 and the groove 32T2 having opening portions facing different directions, the component 20B1 and the component 20B2 can be joined via the wires 32 held by the wire holding portions TR4, TR5, and TR6.

In addition, in a region where the bottom portion 23 and the side wall portion 24 intersect with each other, a groove 31T into which the wire 31 can be inserted is formed. In a region where the roof portion 22 and the side wall portion 25 intersect with each other, a groove 33T into which the wire 33 can be inserted is formed. The groove 33T has an opening portion on the upper surface 22a of the roof portion 22. In a region where the bottom portion 23 and the side wall portion 25 intersect with each other, a groove 34T into which the wire 34 can be inserted is formed. The groove 34T has an opening portion on a side surface of the bottom portion 23.

### <Connection Method with Lead Portion>

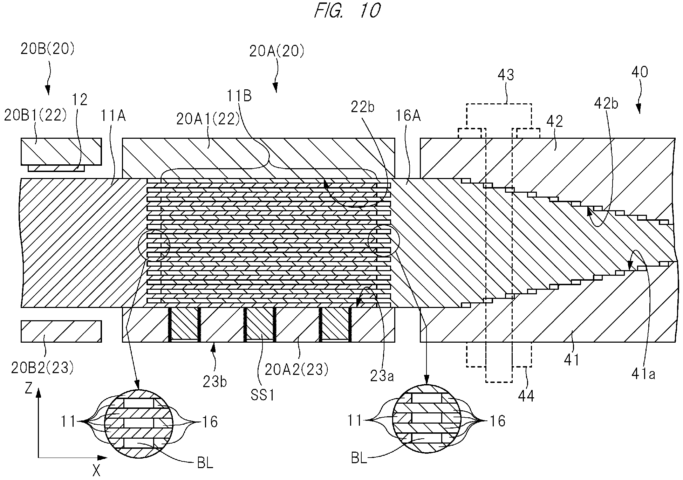

Next, a method for electrically connecting the lead portion 40 and the superconducting wire material 10 illustrated in FIG. 2 will be described. FIG. 10 is a cross-sectional view taken along line C-C in FIG. 2. As described above, the laminate 11A of the superconducting tape wire materials 11 illustrated in FIG. 3 is obtained by laminating 152 superconducting tape wire materials 11. However, in FIG. 10, in order to make it easy to see a structure in which a laminate 11A of superconducting tape wire materials 11 and a laminate 16A of superconducting tape wire materials 16 overlap each other, the number of laminated materials is shown to be small.

In a case where the superconducting wire material 10 illustrated in FIG. 2 is used as a coil for generating a magnetic field in a magnetic field-confinement nuclear fusion device, the lead portion 40 functions as a terminal for connecting a power supply source (not illustrated) and the coil. By attaching the lead portion 40 functioning as a terminal to the superconducting wire material 10 including a superconductor, an external device and the superconducting wire material 10 can be easily electrically connected. The lead portion 40 illustrated in FIG. 10 includes a support portion 41 that supports the laminate 16A of a plurality of superconducting tape wire materials 16, and a lid portion 42 that covers the laminate 16A of the plurality of superconducting tape wire materials 16. Each of the support portion 41 and the lid portion 42 is made of metal such as copper, for example. The laminate 16A of the plurality of superconducting tape wire materials 16 is sandwiched between the support portion 41 and the lid portion 42. In addition, the laminate 16A of the plurality of superconducting tape wire materials 16 is fixed between the support portion 41 and the lid portion 42.

Each of the plurality of superconducting tape wire materials 16 is a tape wire including a superconductor layer, similarly to the superconducting tape wire material 11 described with reference to FIG. 1. A method for sandwiching the laminate 11A of the superconducting tape wire materials 11 between the support portion 41 and the lid portion 42 of the lead portion 40 may be applied. However, from the viewpoint of making it easy to connect the superconductor and the metal that is not the superconductor in a favorable state in the lead portion 40, it is preferable to use the laminate 16A of the superconducting tape wire materials 16 for connection to the lead portion 40 as in the present embodiment.

As illustrated in FIG. 10, each of an upper surface 41a of the support portion 41 and a lower surface 42b of the lid portion 42 is formed in a stepwise shape. Each of the plurality of superconducting tape wire materials 16 is in contact with any step of the upper surface 41a and the lower surface 42b formed in a stepwise shape. In addition, the laminate 16A is adhered to the support portion 41 and the lid portion 42. Since each of the upper surface 41a of the support portion 41 and the lower surface 42b of the lid portion 42 is formed in a stepwise shape, each of the superconducting tape wire materials 16 constituting the laminate 16A can be brought into contact with the support portion 41 or the lid portion 42.

As illustrated in FIG. 2, each of the support portion 41 and the lid portion 42 has a plurality of through-holes 41H and a plurality of through-holes 42H. A bolt 43 that penetrates both the through-hole 41H and the through-hole 42H is inserted into some of the plurality of through-holes 42H and 41H. A nut 44 is attached to the bolt 43. When the bolt 43 and the nut 44 are tightened, an external force is applied so that a separation distance between the support portion 41 and the lid portion 42 becomes shorter. The laminate 16A illustrated in FIG. 10 is clamped between the support portion 41 and the lid portion 42 by an external force generated by tightening the bolt 43 and the nut 44. The surface pressure received by the laminate 16A from the support portion 41 and the lid portion 42 of the lead portion 40 is, for example, about 100 MPa (megapascal).

In the case of the present embodiment, by adjusting a fastening force between the bolt 43 and the nut 44, it is possible to improve the adhesion of a contact interface between the superconducting tape wire material 16, and the support portion 41 or the lid portion 42. As a result, it is possible to improve the electrical connection reliability between the lead portion 40 and the superconducting tape wire material 16.

In addition, the laminate 16A of the superconducting tape wire material 16 extends from the lead portion 40 toward the block 20A adjacent to the lead portion. As illustrated in FIG. 10, a place where the laminate 16A of the superconducting tape wire materials 16 and the laminate 11A of the superconducting tape wire materials 11 are electrically connected to each other is surrounded by the block 20A. In other words, in the holding space 21 (see FIG. 6) of the block 20A, the laminate 16A of the superconducting tape wire materials 16 and the laminate 11A of the superconducting tape wire materials 11 are disposed.

In the example of the present embodiment, a plurality of superconducting tape wire materials 11 and a plurality of superconducting tape wire materials 16 are alternately laminated in the holding space 21 (see FIG. 6) of the block 20A. In the case of a structure in which the superconducting tape wire materials 11 and the superconducting tape wire materials 16 are alternately laminated, a contact area between the superconducting tape wire material 11 and the superconducting tape wire material 16 can be increased as compared with a case in which the laminate 16A of the superconducting tape wire material 16 is simply disposed on the laminate 11A of the superconducting tape wire material 11. In other words, a path for electrically connecting the superconducting tape wire material 11 and the superconducting tape wire material 16 increases. Therefore, it is possible to improve the electrical connection reliability between the superconducting tape wire material 11 and the superconducting tape wire material 16.

Note that, in the case of the present embodiment, a plurality of (for example, two or three) superconducting tape wire materials 11 and a plurality of (for example, two or three) superconducting tape wire materials 16 may be alternately laminated. However, from the viewpoint of increasing the contact area between the superconducting tape wire material 11 and the superconducting tape wire material 16, it is preferable that the superconducting tape wire material 11 and the superconducting tape wire material 16 are alternately laminated one by one as in the present embodiment.

Increasing a path for electrically connecting the superconducting tape wire material 11 and the superconducting tape wire material 16 is preferable from the following points. That is, for example, in a case where some of the plurality of superconducting tape wire materials 11 or the plurality of superconducting tape wire materials 16 are quenched, the resistance increases at a normal-conducting place. However, if there are a plurality of current paths, a current preferentially flows through the path in a superconducting state. As a result, it is possible to suppress heat generation at a quenched place, and therefore it is possible to suppress propagation of quenching. In other words, it is possible to suppress a decrease in electrical characteristics due to locally occurring quenching.

A laminate 11B of the superconducting tape wire material 11 and the superconducting tape wire material 16 is pressed against the lower surface 22b of the roof portion 22 by the screw SS1. As described above, since the lower surface 22b of the roof portion 22 is a flat surface, the laminate 11B of the superconducting tape wire material 11 and the superconducting tape wire material 16 is fixed in the holding space 21 (see FIG. 6) of the block 20A by tightening the screw SS1.

In addition, in the example illustrated in FIG. 10, a plurality of (three in FIG. 10) screws SS1 is arranged along the X direction. In this case, a force for fixing the laminate of the superconducting tape wire material 11 and the superconducting tape wire material 16 to the block 20A acts at a plurality of places. As a result, the adhesion between the superconducting tape wire materials 16 and superconducting tape wire materials 11 which are alternately laminated is improved. Specifically, in an adhesion interface between the superconducting tape wire material 16 and the superconducting tape wire material 11, the area of a region where the favorable adhesion state is realized increases. As a result, it is possible to improve the electrical connection reliability between the superconducting tape wire material 16 and the superconducting tape wire material 11.

As illustrated in FIG. 10, in the case of the block 20B, the laminate 11A is not in contact with the roof portion 22 and the bottom portion 23. Therefore, the block 20B is not suitable from the viewpoint of fixing the laminate 11A like the block 20B. Conversely, although an assembling method of the block 20A is more complicated than that of the block 20B in that the screw SS1 needs to be attached, the block 20A is superior to the block 20B from the viewpoint of fixing the laminate 11B. That is, in order to connect the superconducting wire material 10 (see FIG. 2) to another component (for example, the lead portion 40), the structure of the block 20A is suitable as the block 20 disposed at the end portion of the arrangement of the plurality of blocks 20.

### <Application to Joining Part of Superconducting Wire Material>

Next, a connection method in the case of using a plurality of superconducting wire materials in a joined manner will be described. Note that, in a case where the superconducting wire materials 10 illustrated in FIG. 2 are joined in series along the X direction, the superconducting wire materials can be connected by a method similar to the method of connecting the superconducting tape wire material 11 and the superconducting tape wire material 16 described with reference to FIG. 10. In this case, the present embodiment can be realized by replacing the lead portion 40 illustrated in FIG. 10 with the block 20B and making the laminate 16A of the superconducting tape wire materials 16 have the same structure as the laminate 11A of the superconducting tape wire materials 11.

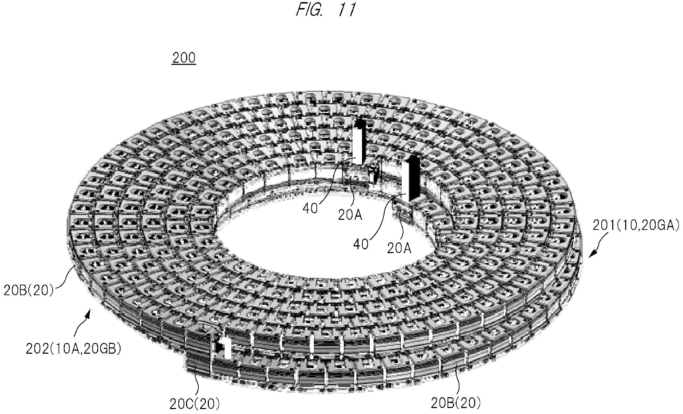

Meanwhile, in a case where a superconducting wire material is used as a coil, a plurality of layers of coils may be formed by connecting superconducting wire materials in parallel as in a coil 200 illustrated in FIG. 11 as an example. FIG. 11 is a perspective view illustrating an example of a case where a superconducting wire material is used as a coil.

In the case of the coil 200 illustrated in FIG. 11, the coil has a structure in which a coil 201 of a first layer and a coil 202 of a second layer are joined to each other. In this case, in order to electrically connect the coil 201 of the first layer and the coil 202 of the second layer, a connection method bent by 90 degrees with respect to the extending direction of the superconducting wire material is required.

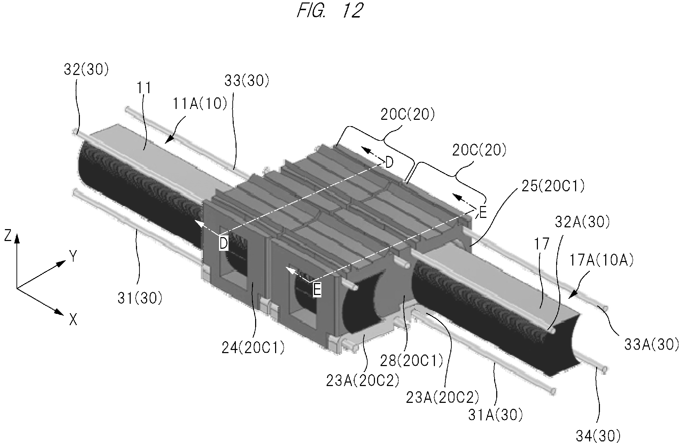

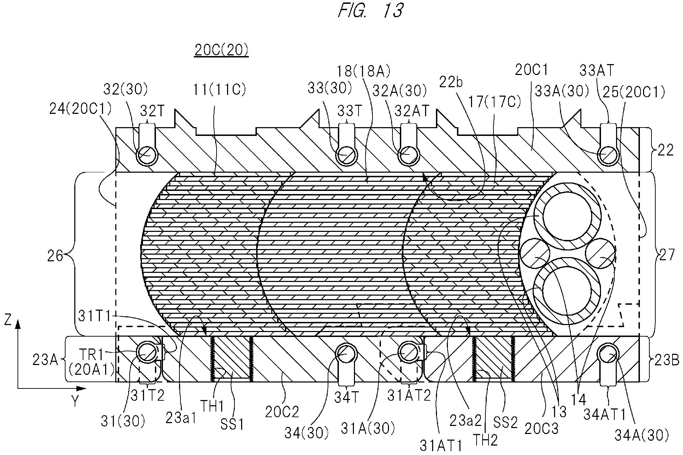

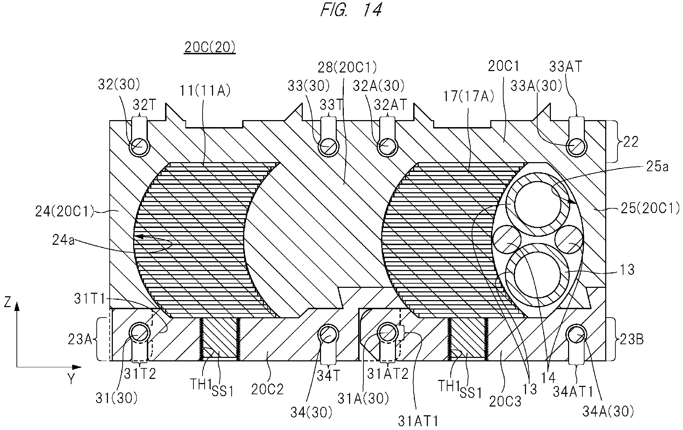

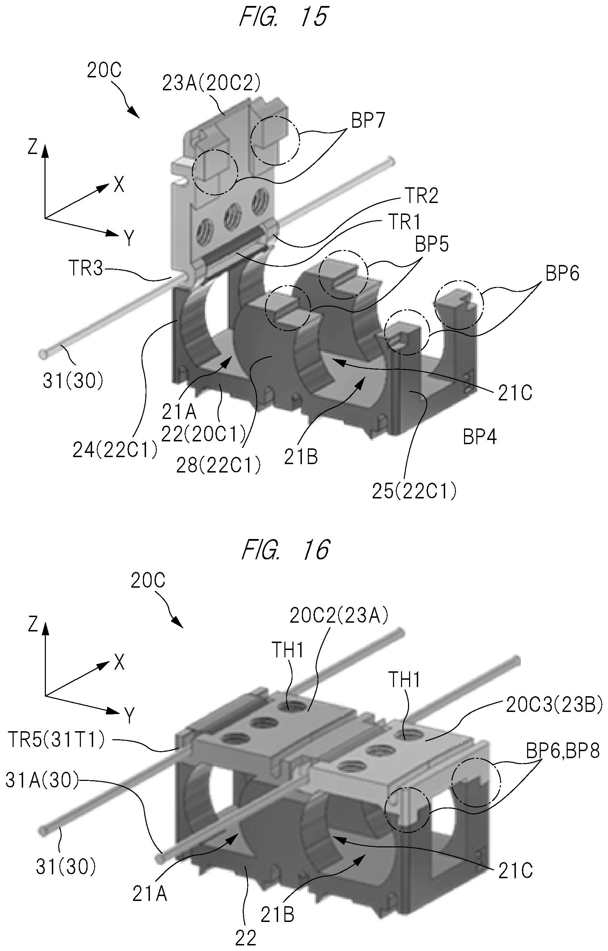

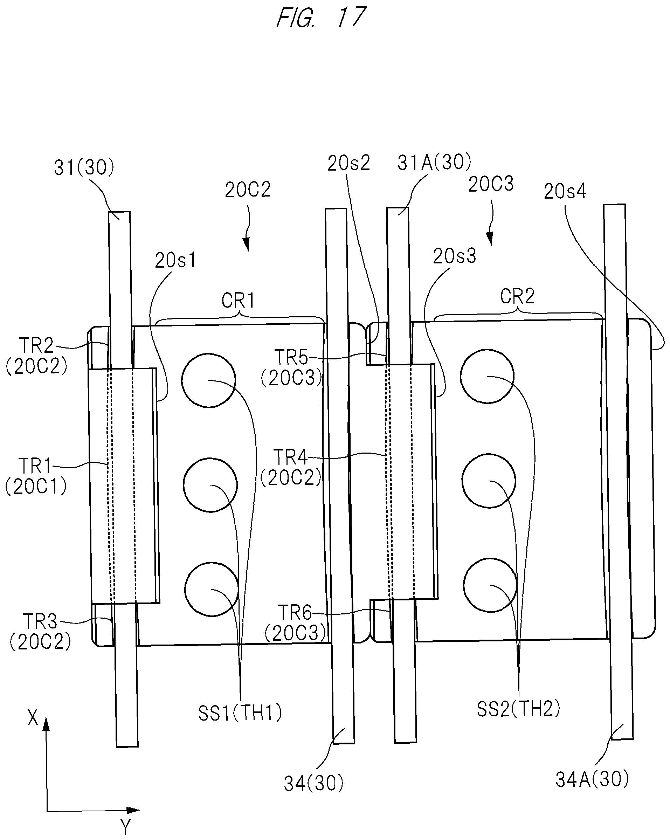

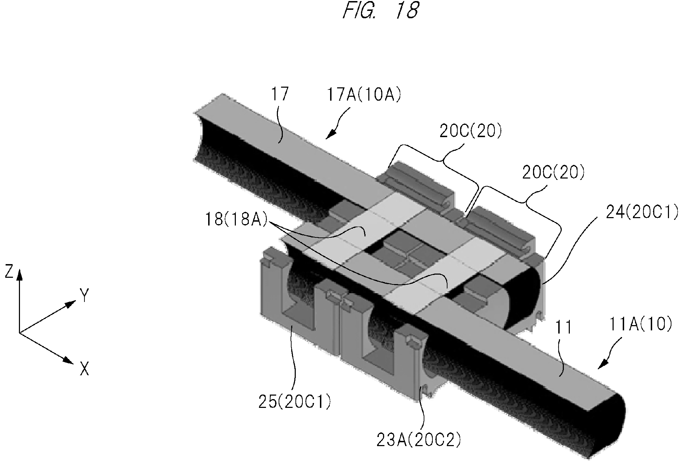

A structure of a protection member that is particularly effective for use in a connection method in a direction bent by 90 degrees with respect to the extending direction of the superconducting wire material will be described below. FIG. 12 is a perspective view illustrating an example of a block that protects a part connecting superconducting wire materials in parallel among a plurality of blocks applied to the coil illustrated in FIG. 11. FIG. 13 is a cross-sectional view taken along line D-D of FIG. 12. FIG. 14 is a cross-sectional view taken along line E-E of FIG. 12. FIG. 5 is a perspective view illustrating one of the two blocks illustrated in FIG. 12. FIG. 15 is a perspective view illustrating a state before the block illustrated in FIG. 13 is assembled. FIG. 16 is a perspective view illustrating a state in which three components constituting a block illustrated in FIG. 13 are assembled. Note that FIGS. 15 and 16 illustrate a state in which blocks illustrated in FIGS. 12, 13, and 14 are turned upside down. FIG. 17 is a plan view of the block illustrated in FIG. 16 as viewed from the bottom portion side. FIG. 18 is a perspective view illustrating a state in which the superconducting wire material illustrated in FIG. 12 is turned upside down and a plurality of wires and the bottom portion are removed.

Note that FIG. 12 illustrates a state in which two blocks 20C illustrated in FIG. 11 are disposed side by side along the extending direction of the superconducting wire material 10. In addition, in FIG. 12, the cooling pipe 13 (see FIG. 3) and the spacer 14 (see FIG. 3) of the superconducting wire materials 10, and a cooling pipe 13 (see FIG. 13) and a spacer 14 (see FIG. 13) of superconducting wire materials 10A are not illustrated. In FIGS. 13 and 14, similarly to FIG. 10, in order to make it easy to see the structure of overlapping with a superconducting tape wire material 18 from either of the superconducting tape wire material 11 or 17, the number of laminated materials is shown to be small.

In the example described below, the superconducting wire material (linear material) 10 and the superconducting wire material (linear material) 10A, which are illustrated in FIG. 12, and a laminate 18A of a plurality of superconducting tape wire materials 18 illustrated in FIG. 13 are protected by a linear material protection member. The superconducting wire material includes a plurality of superconducting tape wire materials 11 laminated. The superconducting wire material 10A includes a plurality of superconducting tape wire materials 17 laminated (a laminate 17A in which a plurality of superconducting tape wire materials 17 is laminated). The superconducting tape wire material 17 and the superconducting tape wire material 18 are the same as the superconducting tape wire material 11 described above, and thus overlapping description is omitted.

As illustrated in FIG. 12, each of the superconducting wire material 10 and the superconducting wire material 10A extends in the X direction. In addition, the superconducting wire material 10 and the superconducting wire material 10A are adjacent to each other at a position where the plurality of superconducting tape wire materials 11 and the plurality of superconducting tape wire materials 17 are electrically connected to each other. In other words, a part of the superconducting wire material 10 and a part of the superconducting wire material 10A are adjacent to each other. In a part where the superconducting wire material 10 and the superconducting wire material 10A are adjacent to each other, the plurality of superconducting tape wire materials 11 and the plurality of superconducting tape wire materials 17 are electrically connected to each other through the plurality of superconducting tape wire materials 18 illustrated in FIG. 13.

In the coil 200 illustrated in FIG. 11, the superconducting wire material 10 and a block group 20GA including a plurality of blocks 20 holding the superconducting wire materials 10 constitutes the coil 201 of the first layer. In addition, in the coil 200, the superconducting wire material 10A and a block group 20GB including a plurality of blocks 20 holding the superconducting wire materials 10A constitutes the coil 202 of the second layer.

As the plurality of blocks 20 holding the superconducting wire material 10 to surround the superconducting wire material, for example, the block 20B described with reference to FIGS. 7 to 9 can be used. However, in the example illustrated in FIG. 11, the block 20A described with reference to FIGS. 3 to 6 is used at the end portion of the arrangement connected to the lead portion among the plurality of blocks 20.

In addition, as illustrated in FIG. 11, the coil 200 includes a block 20C having a structure different from those of the block 20A and the block 20B. As illustrated in FIG. 12, the block 20C is a block 20 for holding a part where a plurality of superconducting tape wire materials 11 and a plurality of superconducting tape wire materials 17 are electrically connected through a plurality of superconducting tape wire materials 18 (see FIG. 13) so as to surround the part.

The wire 31 extending in the X direction is engaged with the plurality of blocks 20 and blocks 20C constituting the block group 20GA (see FIG. 11). The wire 31A extending in the X direction is engaged with the plurality of blocks 20 and blocks 20C constituting the block group 20GB (see FIG. 11).

As illustrated in FIG. 16, the block 20C includes a holding space 21A for holding the superconducting wire material 10 (see FIG. 12), a holding space 21B for holding the superconducting wire material 10A (see FIG. 12), and a holding space 21C that is formed to cause the holding space 21A to communicate with the holding space 21B and is for holding the plurality of superconducting tape wire materials 18. In addition, the block 20C includes a roof portion 22 that covers the holding space 21A and the holding space 21B, a bottom portion 23A located on the opposite side of the roof portion 22 with the holding space 21A interposed between the roof portion 22 and the bottom portion 23A, and a bottom portion 23B located on the opposite side of the roof portion 22 with the holding space 21B interposed between the roof portion 22 and the bottom portion 23B.

As illustrated in FIG. 14, the block 20C includes a side wall portion 24 that is continuous with each of the roof portion 22 and the bottom portion 23A, a side wall portion 25 that is continuous with each of the roof portion 22 and the bottom portion 23B and is located on the opposite side of the side wall portion 24, and a middle wall portion 28 located between the side wall portion 24 and the side wall portion 25.

When the configuration of the block 20C is classified by separable components, it can be expressed as follows. That is, as illustrated in FIG. 14, the block 20C includes a component 20C1 constituting the roof portion 22, the side wall portion 24, the side wall portion 25, and the middle wall portion 28. The block 20C is joined to the component 20C1 via the wire 31, and includes a component 20C2 constituting the bottom portion 23A. The block 20C is joined to the component 20C1 via the wire 31A, and includes a component 20C3 constituting the bottom portion 23B.

As illustrated in FIG. 15, the component 20C1 includes a wire holding portion TR1 that is formed at a position where the side wall portion 24 and the bottom portion 23A are combined and is capable of engaging with the wire 31. The component 20C1 includes a fixing portion BP5 that is formed at a position where the middle wall portion 28 and the bottom portion 23A are combined and is able to fix the component 20C2. The component 20C1 includes a fixing portion BP6 that is formed at a position where the side wall portion 25 and the bottom portion 23B (see FIG. 6) are combined and is able to fix the component 20C3.

As illustrated in FIG. 17, the component 20C2 includes a side 20s1 disposed along the side wall portion 24, a side 20s2 disposed on the opposite side of the side 20s1, and a central region CR1 disposed between the side 20s1 and the side 20s2 in the Y direction perpendicular to the X direction.

The component 20C2 includes a wire holding portion TR2 and a wire holding portion TR3 formed along 20s1 in a state in which the wire holding portion TR1 of the component 20C1 can be sandwiched. Each of the wire holding portion TR2 and the wire holding portion TR3 extends along the X direction. In the X direction, the wire holding portion TR1 of the component 20C1 is sandwiched between the wire holding portion TR2 and the wire holding portion TR3.

The component 20C2 includes a wire holding portion TR4 that is formed at a position where the middle wall portion 28 and the bottom portion 23B are combined and is capable of engaging the wire 31A. The component 20C2 is disposed in the central region CR1 and has a screw hole TH1 formed to penetrate the component 20C2 in the thickness direction. The component 20C2 is disposed along the side 20s2 and has a fixing portion BP7 (see FIG. 15) that is fixable to the fixing portion BP5 of the component 20C1.

The component 20C3 includes a side 20s3 disposed along the side 20s2 of the component 20C2, a side 20s4 disposed on the opposite side of the side 20s3, and a central region CR2 disposed between the side 20s3 and the side 20s4 in the Y direction. Each of the side 20s1, the side 20s2, the side 20s3, and the side 20s4 extends along the X direction.

The component 20C3 includes a wire holding portion TR5 and a wire holding portion TR6 formed along the side 20s3 in a state in which the wire holding portion TR4 of the component 20C2 can be sandwiched. Each of the wire holding portion TR5 and the wire holding portion TR6 extends along the X direction. In the X direction, the wire holding portion TR4 of the component 20C2 is sandwiched between the wire holding portion TR5 and the wire holding portion TR6.

The component 20C3 includes a screw hole TH2 that is disposed in the central region CR2 and is formed to penetrate the component 20C3 in the thickness direction. Further, the component 20C3 includes a fixing portion BP8 (see FIG. 16) which is disposed along the side 20s4 and is fixable to the fixing portion BP6 (see FIG. 15) of the component 20C1.

In the case of the example illustrated in FIGS. 12 to 17, as illustrated in FIGS. 15 and 16, by combining the fixing portion BP7 (see FIG. 15) which is a convex portion and the fixing portion BP5 (see FIG. 15) which is a concave portion, the fixing portion BP5 and the fixing portion BP7 are in close contact with each other and fixed. That is, in the example illustrated in FIGS. 12 to 17, the fixing portion BP5 and the fixing portion BP7 are fixed by crimping. Similarly, the fixing portion BP6 illustrated in FIG. 15 is fixed to the fixing portion BP8 of the component 20C3 illustrated in FIG. 16 by crimping. The fixing portion BP8 of the component 20C3 is a convex portion that has the similar structure to the fixing portion BP7 illustrated in FIG. 15.

Note that, similarly to the fixing method of the fixing portion BP1 and the fixing portion BP2 illustrated in FIGS. 5 and 6, the fixing method of the fixing portion BP5 and the fixing portion BP7 illustrated in FIG. 15 and the fixing method of the fixing portion BP6 and the fixing portion BP8 illustrated in FIG. 16 are not limited to the crimping method, and there are various modification examples. For example, a method of fixing by welding can be exemplified.

As illustrated in FIGS. 13 and 17, the screw hole TH1 is disposed in the central region CR1 (see FIG. 17) and penetrates the component 20C2 in the thickness direction. Similarly, the screw hole TH2 is disposed in the central region CR2 (see FIG. 17), and is formed to penetrate the component 20C3 in the thickness direction.

The screw SS1 is inserted into the screw hole TH1. In the example illustrated in FIG. 13, one end portion of the screw SS1 is in contact with a laminate 11C in which the superconducting tape wire material 11 and the superconducting tape wire material 18 are alternately laminated. In the case of the present embodiment, the block 20C provided in the connecting portion of the superconducting wire material can fix the laminate 11C in the holding space 21A (see FIG. 16) with the screw SS1.

Similarly, a screw SS2 is inserted into the screw hole TH2. In the example illustrated in FIG. 13, one end portion of the screw SS2 is in contact with the laminate 17C in which the superconducting tape wire material 17 and the superconducting tape wire material 18 are alternately laminated. In the case of the present embodiment, the block 20C provided in the connecting portion of the superconducting wire material can fix the laminate 17C in the holding space 21B (see FIG. 16) with the screw SS2.

By fixing each of the laminate 11C and the laminate 17C, the laminate 18A of the superconducting tape wire materials 18, which is disposed between the laminate 11C and the laminate 17C in the Y direction, is fixed in the holding space 21C (see FIG. 16) .

In the case of the block 20C, since the laminate 11C is fixed by the screw SS1, it is possible to improve the electrical connection reliability between the superconducting tape wire material 11 and the superconducting tape wire material 18. Similarly, in the case of the block 20C, since the laminate 17C is fixed by the screw SS2, it is possible to improve the electrical connection reliability between the superconducting tape wire material 17 and the superconducting tape wire material 18.

In addition, as illustrated in FIG. 17, a plurality of (three in FIG. 17) screws SS1 is arranged along the X direction. As already described with reference to FIG. 10, a force for fixing the laminate of the superconducting tape wire material 11 and the superconducting tape wire material 18 illustrated in FIG. 13 to the block 20C acts at a plurality of places. As a result, the adhesion between the superconducting tape wire materials 11 and superconducting tape wire materials 18 which are alternately laminated is improved. Specifically, in an adhesion interface between the superconducting tape wire material 11 and the superconducting tape wire material 18, the area of a region where the favorable adhesion state is realized increases. As a result, it is possible to improve the electrical connection reliability between the superconducting tape wire material 11 and the superconducting tape wire material 18. Similarly, in the example illustrated in FIG. 17, a plurality of (three in FIG. 17) screws SS2 is arranged along the X direction. As a result, it is possible to improve the electrical connection reliability between the superconducting tape wire material 17 and the superconducting tape wire material 18, which are illustrated in FIG. 13.

Each of the screw SS1 and the screw SS2 is a hexagon screw (also referred to as a set screw) having no screw thread. The entire screw SS1 is buried in the screw hole TH1. Similarly, the entire screw SS2 is buried in the screw hole TH2. By using a hexagon screw as the screw SS1 and the screw SS2, the linear material covered by the protection member can be easily laminated.

In addition, in order to easily fix the laminate 11A with the screw SS1, the block 20C preferably has the following structure. That is, each of the inner side surface 24a of the side wall portion 24 and the inner side surface 25a of the side wall portion 25, which are included in the component 20C1 of the block 20C illustrated in FIG. 14, has an arc shape in side view in the X direction (see FIG. 2). An upper surface 23a1 of the bottom portion 23A and an upper surface 23a2 of the bottom portion 23B of the block 20C are flat surfaces. In addition, the lower surface 22b of the roof portion 22 of the block 20C is a flat surface.

In other words, a surface (upper surface 23a1) of the bottom portion 23A of the block 20C, which is in contact with the laminate 11C, and a surface (lower surface 22b) of the roof portion 22 of the block 20C, which is in contact with the laminate 11C, are flat surfaces. A surface (upper surface 23a2) of the bottom portion 23B of the block 20C, which is in contact with the laminate 17C, and a surface (lower surface 22b) of the roof portion 22 of the block 20C, which is in contact with the laminate 17C, are flat surfaces.

In this case, it is possible to improve the adhesion between the laminate 11C and the lower surface 22b and the adhesion between the laminate 11C and the upper surface 23a1. Similarly, it is possible to improve the adhesion between the laminate 17C and the lower surface 22b and the adhesion between the laminate 17C and the upper surface 23a2.

In addition, as illustrated in FIG. 13, each of the side wall portion 24 and the side wall portion 25 included in the component 20A1 of the block 20C has an opening portion that penetrates the side wall portion 24 or the side wall portion 25 in the Y direction. Specifically, the side wall portion 24 has an opening portion 26 that penetrates the side wall portion 24 in the Y direction. In addition, the side wall portion 25 has an opening portion 27 that penetrates the side wall portion 25 in the Y direction.

As described above, by providing the opening portion 26 or the opening portion 27, it is possible to improve the strength of the side wall portion 24 and the side wall portion 25 against an external force applied in the Z direction illustrated in FIG. 13. Since other effects obtained by providing the opening portion 26 or the opening portion 27 are as described above, repetitive description thereof will be omitted.

As illustrated in FIG. 13, the groove 31T1 and the groove 31T2 into which the wires 31 can be inserted are formed in a region where the bottom portion 23A and the side wall portion 24 intersect with each other. The groove 31T1 is a groove provided in the component 20C1, and has an opening portion facing the component 20C1. The groove 31T1 communicates with the wire holding portion TR1 at the bottom of the groove. The groove 31T2 is a groove provided in the component 20C2, and has an opening portion on the lower surface of the bottom portion 23A. The groove 31T2 communicates with the wire holding portion TR2 (see FIG. 17) or the wire holding portion TR3 (see FIG. 17) at the bottom of the groove. As illustrated in FIG. 13, by inserting the wires 31 from the groove 31T1 and the groove 31T2 having opening portions facing different directions, the component 20C1 and the component 20C2 can be joined via the wires 31 held by the wire holding portions TR1, TR2, and TR3.

In a region where the bottom portion 23A and the middle wall portion 28 (see FIG. 14) intersect with each other, a groove 31AT1 and a groove 31AT2 into which the wires 31A can be inserted are formed. The groove 31AT1 is a groove provided in the component 20C2, and has an opening portion facing the component 20C3. The groove 31AT1 communicates with the wire holding portion TR4 (see FIG. 17) at the bottom of the groove. The groove 31AT2 is a groove provided in the component 20C3, and has an opening portion on the lower surface of the bottom portion 23B. The groove 31AT2 communicates with the wire holding portion TR5 (see FIG. 17) or the wire holding portion TR6 (see FIG. 17) at the bottom of the groove. As illustrated in FIG. 33, by inserting the wires 31A from the groove 31AT1 and the groove 31AT2 having opening portions facing different directions, the component 20C2 and the component 20C3 can be joined via the wires 31A held by the wire holding portions TR4, TR5, and TR6.

In the example illustrated in FIG. 13, in addition to the above description, a groove 32T into which the wire 32 can be inserted is formed in a region where the roof portion 22 and the side wall portion 24 intersect with each other. In a region where the roof portion 22 and the middle wall portion 28 (see FIG. 14) intersect with each other, a groove 33T into which the wire 33 can be inserted and a groove 32AT into which the wire 32A can be inserted are formed. In a region where the roof portion 22 and the side wall portion 25 intersect with each other, a groove 33AT into which the wire 33A can be inserted is formed. In a region where the bottom portion 23A and the middle wall portion 28 intersect with each other, a groove 34T into which the wire 34 can be inserted is formed. In a region where the bottom portion 23B and the side wall portion 25 intersect with each other, a groove 34AT into which the wire 34A can be inserted is formed.

FIG. 18 is a perspective view illustrating a state in which the superconducting wire material illustrated in FIG. 12 is turned upside down and a plurality of wires and the bottom portion are removed. In the example illustrated in FIG. 12, a plurality of (two in FIG. 12) blocks 20C is arranged adjacent to each other. In other words, in the case of the example illustrated in FIG. 18, the superconducting wire material 10 including a plurality of superconducting tape wire materials 11 and the superconducting wire material 10A including a plurality of superconducting tape wire materials 17 are connected by the plurality of blocks 20C arranged adjacent to each other. In this case, the cross-sectional area of a path through which a current in the superconducting state flows can be increased as compared with the case where the superconducting wire material 10 and the superconducting wire material 10A are connected only by one block 20C.

As illustrated in FIG. 13, in a region where only the superconducting tape wire materials 18 are laminated, a plurality of superconducting tape wire materials 18 is laminated to be spaced apart from each other. Therefore, the number of laminated superconducting tape wire materials 18 in the laminate 18A is, for example, the half of the number of laminated superconducting tape wire materials 11 in the laminate 11A. Therefore, in a case where the superconducting wire material 10 (see FIG. 18) and the superconducting wire material 10A (see FIG. 18) are connected by only one block 20C, the path cross-sectional area of the current in the superconducting state is halved in the part of the laminate 18A.

As illustrated in FIG. 18, in a case where the superconducting wire material 10 and the superconducting wire material 10A are connected by two blocks 20C arranged adjacent to each other, two parts of the laminate 18A are connected in parallel. As a result, it is possible to compensate for the decrease in the cross-sectional area of the path through which the current in the superconducting state flows in a connection part.

Note that the connection method using block 20C illustrated in FIGS. 11 to 18 can also be realized by using the block 20A illustrated in FIGS. 3 to 6. For example, when two blocks 20A are combined, a connection method in a case where there is one block 20C can be realized. In addition, when four blocks 20A are combined, as illustrated in FIGS. 12 and 18, a connection method in which two blocks 20C are combined can be realized. However, as described with reference to FIGS. 11 to 18, in a case where the superconducting wire materials are connected in parallel, for example, from the viewpoint of improving the positional accuracy between the coil 201 of the first layer and the coil 202 of the second layer illustrated in FIG. 11, it is more preferable to connect the superconducting wire materials in parallel by using the block 20C.

In addition, as illustrated in FIGS. 13 and 18, a method for electrically connecting the plurality of superconducting tape wire materials 18 extending in the direction (Y direction) intersecting (specifically, perpendicular to) with the extending direction (X direction) of the superconducting wire material 10 and the plurality of superconducting tape wire materials 11 constituting the superconducting wire material 10 can be applied to the connection with the lead portion described with reference to FIG. 10.

For example, in the case of the coil 200 illustrated in FIG. 11, the lead portion 40 is connected to the block 20A disposed at the end portion of the arrangement of the block 20. In the case of the coil 200, the lead portion 40 extends in a direction perpendicular to the arrangement direction of the plurality of blocks 20 constituting the coil 200. In this case, each of the plurality of superconducting tape wire materials 16 sandwiched between the lead portions 40 described with reference to FIG. 10 extends into the holding space 21 (see FIG. 6) of the block 20A via the opening portion 26 or the opening portion 27 of the block 20A illustrated in FIG. 3. In addition, in the holding space 21 of the block 20A, the plurality of superconducting tape wire materials 11 (or the plurality of superconducting tape wire materials 17) and the superconducting tape wire material 16 are alternately laminated. As a result, in the coil 200 illustrated in FIG. 11, the lead portion 40 extending in the direction perpendicular to the arrangement direction of the plurality of blocks 20 can be electrically connected to the superconducting wire material.

### <Modification Example of Connection Method of Lead Portion>

Next, a modification example of the connection method with the lead portion described with reference to FIG. 10 will be described. As described with reference to FIG. 10, in a case where the superconducting tape wire material 11 and the superconducting tape wire material 16 are alternately laminated, a gap BL is generated between the end portion of the superconducting tape wire material 11 and the end portion of the superconducting tape wire material 16. In a region overlapping the gap BL in the Z direction, the number of the superconducting tape wire materials 11 (or the superconducting tape wire materials 16) is small. For example, in the case of the example illustrated in FIG. 10, 152 superconducting tape wire materials are laminated in a region that does not overlap with the gap BL. On the other hand, in the region overlapping the gap BL, the number of laminated superconducting wire materials is half of 152 (76).

In this case, in the path through which the current flows in the superconducting state, the maximum value (referred to as a maximum current value below) of the current that can flow in a place where the number of laminated materials is the smallest (for example, a place of 76) is restricted. In other words, from the viewpoint of causing a large current to flow, a place where the gap BL exists becomes a bottleneck.

However, it is difficult to dispose the end portion of the superconducting tape wire material 11 and the end portion of the superconducting tape wire material 16 illustrated in FIG. 10 to be in contact with each other in a state of facing each other, and the generation of the gap BL is inevitably allowed.

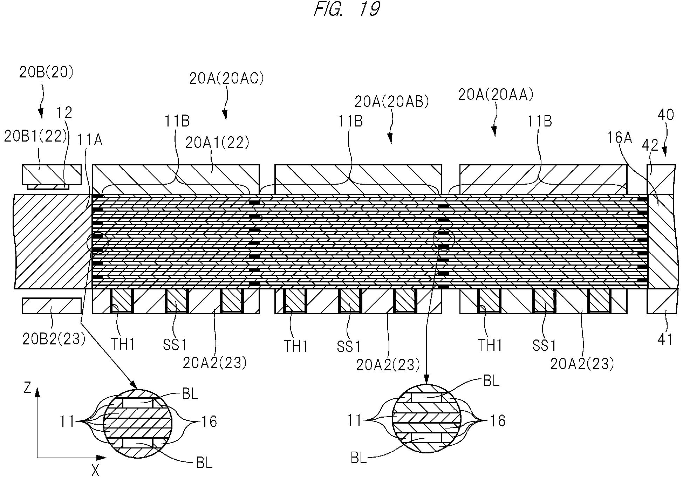

Hereinafter, an embodiment for reducing the restriction on the maximum current value caused by the gap BL by devising the laminated state of the superconducting tape wire material 11 and the superconducting tape wire material 16 will be described. FIG. 19 is a cross-sectional view illustrating a modification example of FIG. 10.

The linear material protection member illustrated in FIG. 19 is different from the linear material protection member illustrated in FIG. 10 in the following points. In the case of the modification example illustrated in FIG. 19, each of the plurality of superconducting tape wire materials 11 is electrically connected to the lead portion 40 via the plurality of superconducting tape wire materials 16 sandwiched between the lead portions 40 disposed adjacent to the block 20A. This point is similar to the example described with reference to FIG. 10.

Between the lead portion 40 and the block 20B, a first block 20A (block 20AA), a second block 20A (block 20AB), and a third block 20A (block 20AC) are arranged along the X direction in order from the side closer to the lead portion 40.

The lead portion 40 includes a support portion 41 that supports the laminate 16A of the plurality of superconducting tape wire materials 16, and a lid portion 42 that covers the laminate 16A. The laminate 16A is sandwiched between the support portion 41 and the lid portion 42 and extends toward the first block 20AA.

A plurality of superconducting tape wire materials 11 and a plurality of superconducting tape wire materials 16 are disposed in the holding space 21 (see FIG. 6) of each of the first, second, and third blocks 20A. In the holding space 21 of each of the first, second, and third blocks 20A, the plurality of superconducting tape wire materials 11 and the plurality of superconducting tape wire materials 16 are laminated.

The structure of the blocks 20AA, 20AB, and 20AC is the same as that of the block 20A described with reference to FIGS. 3 to 6.

In the case of the example illustrated in FIG. 19, since a plurality of blocks 20A is arranged adjacent to each other along the X direction, it is possible to reduce the number of gaps BL overlapping with each other in the thickness direction (Z direction).

In the example illustrated in FIG. 19, in the first layer (for example, the layer closest to the bottom portion 23), the superconducting tape wire material 11 extends from the laminate 11A protected by the block 20B to the second block 20AB via the third block 20AC. The superconducting tape wire material 11 terminates before reaching the first block 20AA. In the first layer, the superconducting tape wire material 16 extends from the laminate 16A sandwiched between the lead portions 40 to the first block 20AA, and terminates at a boundary between the blocks 20AA and 20AB.

In the second layer (for example, a layer that is in contact with the first layer and is immediately above the first layer), the superconducting tape wire material 11 extends from the laminate 11A protected by the block 20B to the third block 20AC. The superconducting tape wire material 11 terminates before reaching the second block 20AB. In the second layer, the superconducting tape wire material 16 extends from the laminate 16A sandwiched between the lead portions 40 to the second block 20AB via the first block 20AA. The superconducting tape wire material 16 terminates at a boundary between the block 20AB and the block 20AC.

In the third layer (for example, a layer that is in contact with the second layer and is immediately above the second layer), the superconducting tape wire material 11 extends from the laminate 11A protected by the block 20B to the first block 20AA via the third block 20AC and the second block 20AB. The superconducting tape wire material 11 terminates before reaching the lead portion 40. In the third layer, the superconducting tape wire material 16 terminates at a boundary between the lead portion 40 and the first block 20AA.

In the fourth layer (for example, a layer that is in contact with the third layer and is immediately above the third layer), the superconducting tape wire material 11 terminates between the laminate 11A protected by the block 20B and the third block 20AC. In the third layer, the superconducting tape wire material 16 extends from the laminate 16A sandwiched between the lead portions 40 to the third block 20AC via the first block 20AA and the second block 20AB. The superconducting tape wire material 16 terminates before reaching the block 20B.

In the fifth layer (for example, a layer that is in contact with the fourth layer and is immediately above the fourth layer), the same mode as that of the first to fourth layers is repeated.

In the case of such a lamination method, the number of the plurality of gaps BL overlapping with each other in the thickness direction (Z direction) of the linear material is smaller than that in the example illustrated in FIG. 10. For example, in the case of the example illustrated in FIG. 19, 152 superconducting tape wire materials are laminated in a region that does not overlap with the gap BL.

On the other hand, in the region overlapping the gap BL, the number of laminated superconducting wire materials is more than half (76) of 152 (114). In other words, in the case of the present modification example, in a region where the superconducting tape wire material 11 and the superconducting tape wire material 16 are laminated, the smallest number (114) of laminated materials is greater than half of the largest number (152) of laminated materials. In the example illustrated in FIG. 19, in the region where the superconducting tape wire material 11 and the superconducting tape wire material 16 are laminated, the smallest number (114) of laminated materials is 75% of the largest number (152) of laminated materials.

According to the present modification example, in a path through which a current flows in the superconducting state, the number of laminated materials at a place where the number of laminated materials is smallest can be made larger than half of the maximum number of laminated materials. As a result, it is possible to increase the maximum current value.

The modification example illustrated in FIG. 19 can be expressed as follows. The laminate of the plurality of superconducting tape wire materials 11 and the plurality of superconducting tape wire materials 16 is fixed by a screw SS1 inserted into a screw hole TH1 provided in each of the first, second, and third blocks 20A.

In the X direction, a gap BL is interposed between each of the plurality of superconducting tape wire materials 11 and each of the plurality of superconducting tape wire materials 16. In the lamination direction of the plurality of superconducting tape wire materials 11 and the plurality of superconducting tape wire materials 16, the total value of the thicknesses of the gaps BL is larger than half of the thickness of the laminate 11A.

### <Modification Example in which Spacer is Disposed in Holding Space>

Next, a modification example of the connection method with the lead portion described with reference to FIG. 10 will be described. FIG. 20 is a cross-sectional view illustrating a modification example of FIG. 3.

A block 20A of a protection member illustrated in FIG. 20 is different from the block 20A of the protection member illustrated in FIG. 3 in the following points. That is, in the case of the modification example illustrated in FIG. 20, a metal plate 19 is disposed on the upper surface 23a of the bottom portion 23. A screw SS1 inserted into a screw hole TH1 is in contact with the metal plate 19.

In the above-described embodiment, an example in which 152 superconducting tape wire materials 11 are laminated has been described. However, there are various modification examples of the dimensions (thickness, width, and the like) and the number of laminated superconducting tape wire materials 11. On the other hand, in consideration of the manufacturing efficiency of a component constituting the block of the protection member, it is preferable to manufacture a highly versatile component capable of coping with the number of laminated materials in a certain range rather than manufacturing a dedicated component corresponding to the number of laminated superconducting tape wire materials 11.

Therefore, in the case of the present modification example, the metal plate 19 functioning as a spacer is inserted between the laminate 11A of the plurality of superconducting tape wire materials 11 and the upper surface 23a of the bottom portion 23. In the example illustrated in FIG. 20, a plurality of metal plates 19 is laminated. By using the plurality of metal plates 19 as described above, it is possible to easily cope with variations in the number of laminated materials.

In addition, in the case of the present modification example, the screw SS1 and the superconducting tape wire material 11 are not in contact with each other. Therefore, even in a case where the screw SS1 is strongly tightened, it is possible to prevent a force from the screw SS1 from being intensively applied to a specific place of the superconducting tape wire material 11. As a result, it is possible to prevent damage to the superconducting tape wire material 11.

### <Connection Method of Superconducting Wire Material>

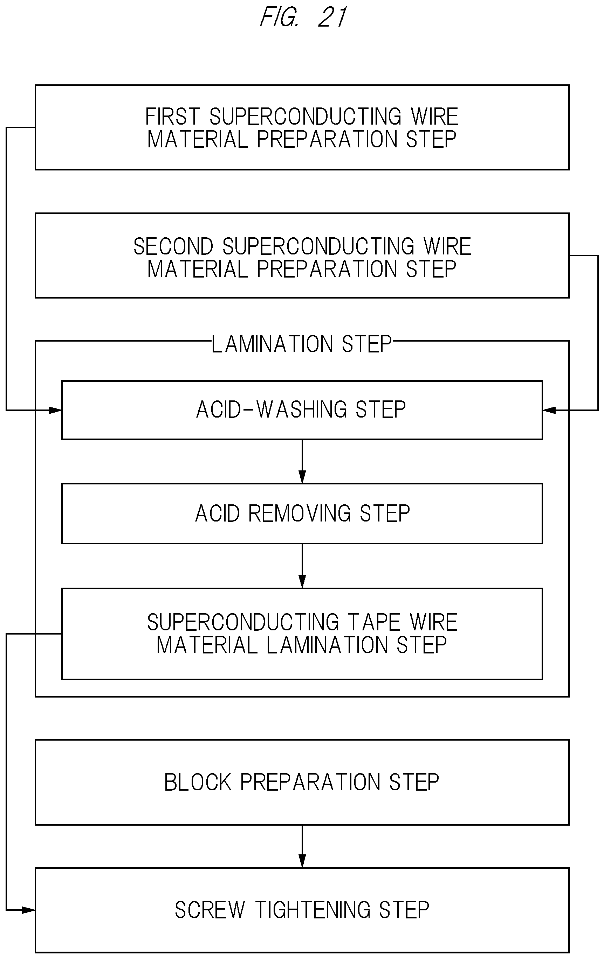

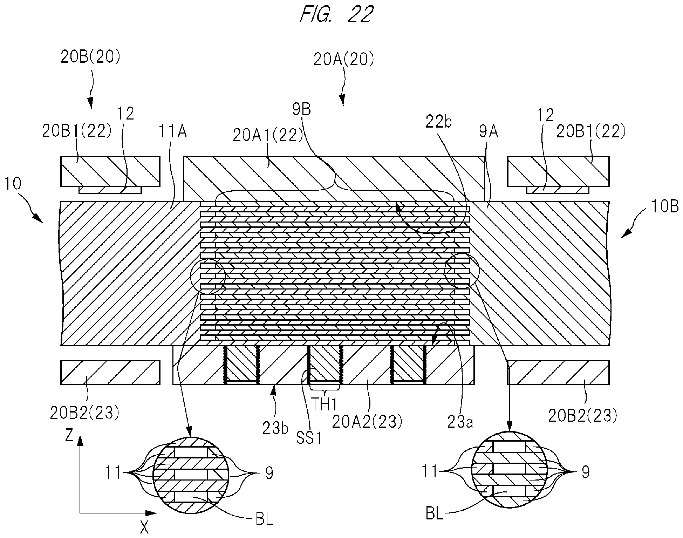

Next, a connection method of the superconducting wire material will be described by using the example already described with reference to FIG. 10. FIG. 21 is an explanatory view illustrating an example of a step flow of the connection method of the superconducting wire material. FIG. 22 is an enlarged cross-sectional view illustrating a linear material after being connected by the connection method of the superconducting wire material illustrated in FIG. 21. In the connection method of the superconducting wire material illustrated in FIG. 21, the method of electrically connecting the lead portion 40 and the superconducting wire material 10, which has been described with reference to FIG. 10, is generalized as the connection method of a plurality of superconducting wire materials 10. The method for electrically connecting the lead portion 40 and the superconducting wire material 10, which has been described with reference to FIG. 10, is an aspect of the connection method of the superconducting wire material illustrated in FIG. 21.

The connection method of the superconducting wire material illustrated in FIG. 21 includes a first superconducting wire material preparation step, a second superconducting wire material preparation step, a lamination step, a block preparation step, and a screw tightening step. Note that there are various embodiments in the order of implementation of the steps illustrated in FIG. 21. For example, each of the first superconducting wire material preparation step and the second superconducting wire material preparation step needs to be completed before the lamination step, but the order of performing of the first superconducting wire material preparation step and the second superconducting wire material preparation step is not particularly limited. In addition, the block preparation step needs to be completed before the screw tightening step, but may be completed before the lamination step or may be performed after the lamination step, for example. On the other hand, the screw tightening step needs to be performed after the lamination step and the block preparation step.

In the first superconducting wire material preparation step illustrated in FIG. 21, the superconducting wire material 10 illustrated in FIG. 22 is prepared, and the superconducting wire material 10 includes a laminate 11A made of a plurality of laminated superconducting tape wire materials 11.

In the second superconducting wire material preparation step illustrated in FIG. 21, a superconducting wire material 10B illustrated in FIG. 22 is prepared, and the superconducting wire material 10B includes a laminate 9A made of a plurality of laminated superconducting tape wire materials 9.

In the lamination step illustrated in FIG. 21, a laminate 9B is formed by alternately laminating some of the plurality of superconducting tape wire materials 11 and some of the plurality of superconducting tape wire materials 9, which are illustrated in FIG. 22, to overlap with each other. Note that details of each step included in the lamination step illustrated in FIG. 21 will be described later. Similarly to the laminate 9B described with reference to FIG. 10, also in the case of the laminate 9B, a plurality of (for example, two or three) superconducting tape wire materials 11 and a plurality of (for example, two or three) superconducting tape wire materials 9 may be alternately laminated. However, from the viewpoint of increasing the contact area between the superconducting tape wire material 11 and the superconducting tape wire material 16, as illustrated in FIG. 22, it is preferable to alternately laminate the superconducting tape wire materials 11 and the superconducting tape wire materials 9 one by one so as to overlap with each other.

In the block preparation step illustrated in FIG. 21, a block 20A that is a protection member capable of holding the laminate 9B illustrated in FIG. 22 so as to surround the periphery thereof is prepared. As already described with reference to FIGS. 3 to 6, the block 20A includes the holding space 21 (see FIG. 6) capable of holding the laminate 9B, the roof portion 22 that covers the holding space 21, the bottom portion 23 located on the opposite side of the roof portion 22 with the holding space 21 interposed between the roof portion 22 and the bottom portion 23, and the screw hole TH1 that penetrates the bottom portion 23 in the thickness direction and communicates with the holding space 21.

In the connection method of a superconducting wire material illustrated in FIG. 21, for example, after the laminate 9B illustrated in FIG. 22 is formed, the block 20A is prepared, and the block 20A is disposed to surround the periphery of the laminate 9B. At this time, the block 20A is engaged with the wire 31 as illustrated in FIG. 5.

Thereafter, as illustrated in FIG. 5, by combining and fixing the fixing portion BP1 of the component 20A1 and the fixing portion BP2 of the component 20A2, the laminate 9B illustrated in FIG. 22 is disposed in the holding space 21 (see FIG. 6) of the block 20A.

Then, in the screw tightening step illustrated in FIG. 21, the laminate 9B is fixed to the holding space 21 (see FIG. 6) of the block 20A by inserting the screw SS1 into the screw hole TH1 formed in the block 20A and tightening the screw SS1.

In a case where a plurality of superconducting wire materials is linked and used as a long superconducting wire material, it is necessary to suppress heat generation at a part connecting the superconducting wire materials. According to the present embodiment, some of the plurality of superconducting tape wire materials 11 and some of the plurality of superconducting tape wire materials 9 are alternately laminated to overlap each other, and the laminate 9B is screwed and fixed, whereby the superconducting tape wire materials 11 and the superconducting tape wire materials 9, which have been laminated, can be reliably brought into surface contact with each other. Therefore, it is possible to reduce the resistance value in the part electrically connecting the superconducting wire material 10 and the superconducting wire material 10B. If the resistance value of the part electrically connecting the superconducting wire material 10 and the superconducting wire material 10B can be reduced, it is possible to reduce the amount of heat generation when a large current flows in this part. That is, the connection method of the superconducting wire material according to the present embodiment is a suitable method from the viewpoint of suppressing heat generation at the connection part.

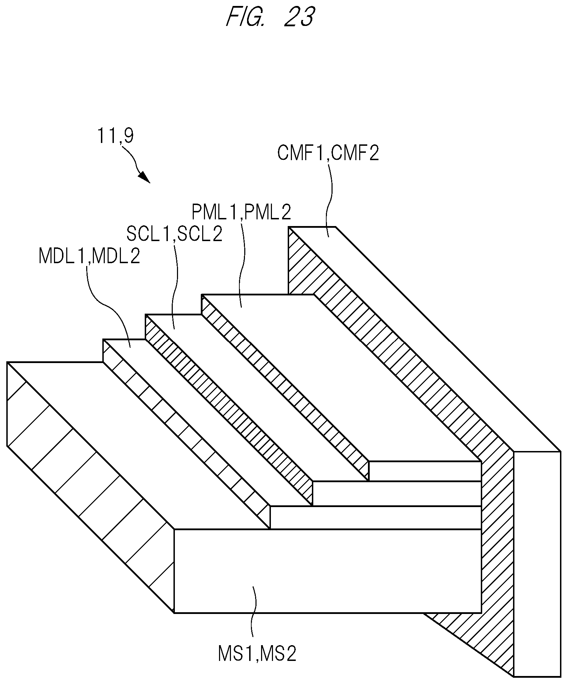

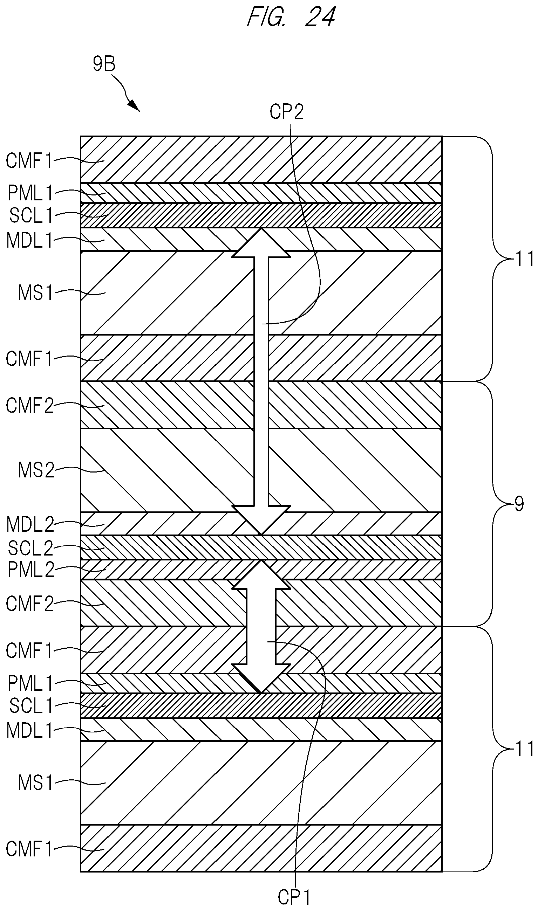

Meanwhile, there is a particularly preferable method for suppressing heat generation in the laminate 9B. Details of the method will be described below. FIG. 23 is an explanatory view illustrating an example of a structure of the superconducting tape wire material illustrated in FIG. 22. FIG. 24 is an enlarged cross-sectional view illustrating an enlarged part of the laminate illustrated in FIG. 22. Note that each of the plurality of superconducting tape wire materials 11 illustrated in FIG. 22 has the same structure as the superconducting tape wire material 11 illustrated in FIG. 23. Similarly, each of the plurality of superconducting tape wire materials 9 illustrated in FIG. 22 has the same structure as the superconducting tape wire material 9 illustrated in FIG. 23.

As illustrated in FIG. 23, the superconducting tape wire material 11 includes a superconducting layer SCL1 made of a superconducting material, a metal substrate MS1 that supports the superconducting layer SCL1, an intermediate layer MDL1 located between the superconducting layer SCL1 and the metal substrate MS1, a protective metal layer PML1 disposed on the opposite side of the intermediate layer MDL1 with the superconducting layer SCL1 interposed therebetween, and a coated metal film CMF1 that covers a laminate of the superconducting layer SCL1, the metal substrate MS1, the intermediate layer MDL1, and the protective metal layer PML1. Similarly, the superconducting tape wire material 9 includes a superconducting layer SCL2 made of a superconducting material, a metal substrate MS2 that supports the superconducting layer SCL2, an intermediate layer MDL2 located between the superconducting layer SCL2 and the metal substrate MS2, a protective metal layer PML2 disposed on the opposite side of the intermediate layer MDL2 with the superconducting layer SCL2 interposed therebetween, and a coated metal film CMF2 that covers a laminate of the superconducting layer SCL2, the metal substrate MS2, the intermediate layer MDL2, and the protective metal layer PML2.

The superconducting tape wire material 11 and the superconducting tape wire material 9 have the same structure. Therefore, an example of a structure of the superconducting tape wire material 11 will be representatively described below, and the same applies to each member constituting the superconducting tape wire material 9. Thus, in the following description, the metal substrate MS1 can be read as the metal substrate MS2, the intermediate layer MDL1 can be read as the intermediate layer MDL2, the protective metal layer PML1 can be read as the protective metal layer PML2, and the coated metal film CMF1 can be read as the coated metal film CMF2.

The metal substrate MS1 is a substrate for forming the superconducting layer SCL1. Therefore, the metal substrate MS1 is required to have mechanical strength to such an extent that the superconducting tape wire material 11 can be handled. In addition, the metal substrate MS1 is preferably made of a material having excellent oxidation resistance in order to suppress participation in formation of the superconducting layer SCL1. The metal substrate MS1 is, for example, a nickel alloy containing nickel as a main component. Examples of an additive element contained in the metal forming the metal substrate MS1 include chromium and molybdenum.

In addition, as described above, since the metal substrate MS1 is required to have high support strength, the thickness of the metal substrate MS1 is thicker than a plurality of other members (each of the superconducting layer SCL1, the intermediate layer MDL1, the protective metal layer PML1, and the coated metal film CMF1) constituting the superconducting tape wire material 11. For example, the thickness of the metal substrate MS1 is about 50 µm to 100 µm or more. On the other hand, the thickness of each of the superconducting layer SCL1, the intermediate layer MDL1, and the protective metal layer PML1 is about 2 µm to 3 µm. Note that, the coated metal film CMF1 is a cylindrical member, and thus the thickness including a hollow space is larger than the thickness of the metal substrate MS1. However, the plate thickness of the coated metal film CMF1 excluding the hollow space is, for example, about 20 µm, and is thinner than the thickness of the metal substrate MS1.

The intermediate layer MDL1 is an underlayer for forming the superconducting layer SC1. In order to prevent direct contact between the superconducting layer SC1 and the metal substrate MS1 or to improve the characteristics of the superconducting layer SC1, films of various materials are used for the intermediate layer MDL1. Examples of the material forming the intermediate layer MDL1 include a laminated film such as an aluminum oxide film, an yttrium oxide film, a magnesium oxide film, or a selenium oxide film.

The superconducting layer SC1 is made of a high-temperature superconductor. There are various examples of a high-temperature superconducting material, and for example, the superconducting layer SC1 may be exemplified by a superconductor containing a rare earth element such as yttrium (Y) or gadolinium (Gd) and containing barium (Ba), copper (Cu), and oxygen (O) in addition to the rare earth element. The exemplified superconducting material is referred to as REBCO.

The protective metal layer PML1 is provided to protect the upper surface side of the superconducting layer SC1. In order to avoid impairment of the electrical characteristics of the superconducting tape wire material 11, a material having an electrical conductivity higher than the metal substrate MS1 is used for the protective metal layer PML1. As an example of the material forming the protective metal layer PML1, silver (Ag) can be exemplified.

The coated metal film CMF1 is an outer shell film that wraps the entire laminate of the superconducting layer SCL2, the metal substrate MS2, the intermediate layer MDL2, and the protective metal layer PML2. As described above, the superconducting tape wire materials 11 are laminated and used. Therefore, the coated metal film CMF1 is required to have a high electrical conductivity from the viewpoint of reducing the resistance in the part electrically connecting the plurality of stacked superconducting tape wire materials 11. A material having a higher electrical conductivity than the metal film CMF1 is used for the coated metal film CMF1. As an example of a material forming the coated metal film CMF1, copper (Cu) can be exemplified. Note that, in a case where the coated metal film CMF1 is made of copper, it is preferable to take an anti-oxidation measure for the surface of the coated metal film CMF1. Therefore, a thin antioxidant film (lamination film) may be formed on the surface of the coated metal film CMF1.

As described above, since the superconducting tape wire material 11 includes the metal substrate MS1 having a relatively low electrical conductivity, the resistance component of a conductive path from the superconducting layer SC1 toward the metal substrate MS1 is larger than the resistance component of a conductive path from the superconducting layer SC1 toward the protective metal layer PML1. Therefore, as illustrated in FIG. 22, from the viewpoint of reducing the resistance component of the conductive path electrically connecting the superconducting tape wire material 11 and the superconducting tape wire material 9 laminated to overlap each other, the connection method as illustrated in FIG. 24 is preferable.

In the case of the example illustrated in FIG. 24, the laminate 9B formed in the lamination step (see FIG. 21) includes a connection part CP1 where the superconducting layer SCL1 and the superconducting layer SCL2 face each other without the metal substrate MS1, the intermediate layer MDL1, the metal substrate MS2, and the intermediate layer MDL2 interposed therebetween, and a connection part CP2 where the superconducting layer SCL1 and the superconducting layer SCL2 face each other with the metal substrate MS1, the intermediate layer MDL1, the metal substrate MS2, and the intermediate layer MDL2 interposed therebetween.

According to the connection method illustrated in FIG. 24, the resistance value at the connection part CP1 is significantly lower than the resistance value at the connection part CP2. This is because the metal substrate MS1 having a relatively high resistance value is not interposed in the connection part CP1. In a case where a current flows through two branched conductive paths, most of the current flows through a conductive path having a relatively low resistance. Thus, when a large current flows through the superconducting wire material 10 and the superconducting wire material 10B illustrated in FIG. 22, most of the current flows through the connection part CP1 illustrated in FIG. 24. As a result, even in a case where the connection part CP2 having a relatively high resistance value is included, a current can flow through a low-resistance conductive path in the entire laminate 9B illustrated in FIG. 22. That is, in the case of the connection method illustrated in FIG. 24, since the resistance value of the main conductive path in the laminate 9B can be reduced, it is possible to reduce heat generation in the laminate 9B.

Next, a preferable aspect will be described from the viewpoint of further reducing the resistance value in the laminate 9B illustrated in FIG. 22. As illustrated in FIG. 21, the lamination step includes an acid-washing step, an acid removing step, and a superconducting tape wire material lamination step.

In the acid-washing step illustrated in FIG. 21, each of a plurality of superconducting tape wire materials 11 and a plurality of superconducting tape wire materials 9 illustrated in FIG. 22 is acid-washed. As described with reference to FIG. 23, the superconducting tape wire material 11 is covered with the coated metal film CMF1 made of copper. Similarly, the superconducting tape wire material 9 is covered with the coated metal film CMF2 made of copper. In addition, in order to prevent oxidation of the coated metal film CMF1 (or the coated metal film CMF2) made of copper, an antioxidant film may be formed on the surface of the coated metal film CMF1 (or the coated metal film CMF2). In the acid-washing step, the antioxidant film (laminate film) is removed by washing each of the superconducting tape wire material 11 and the superconducting tape wire material 9 with an acidic washing liquid.

Then, in the acid removing step illustrated in FIG. 21, the acid is removed from the surfaces of the plurality of superconducting tape wire materials 11 and the plurality of superconducting tape wire materials 9 after the acid-washing step. This is because when the superconducting tape wire material lamination step is performed in a state where the acidic washing liquid remains on the surface of the coated metal film CMF1 (or the coated metal film CMF2), there is a concern that oxidation of the superconducting tape wire material 11 (or the superconducting tape wire material 9) may proceed due to the remaining acid. Examples of the method for removing the acid include a method for wiping with dry paper or cloth.

Then, in the superconducting tape wire material lamination step illustrated in FIG. 21, after the acid removing step, some of the plurality of superconducting tape wire materials 11 and some of the plurality of superconducting tape wire materials 9 are alternately laminated to overlap with each other. As described above, the conductivity of the coated metal film CMF1 can be further improved by acid-washing each of the plurality of superconducting tape wire materials 11 and the plurality of superconducting tape wire materials 9 illustrated in FIG. 22 before performing the superconducting tape wire material lamination step.

Incidentally, the connection method of the superconducting wire material described with reference to FIGS. 21 to 24 has been described by extracting features related to the connection method of the superconducting wire material in the embodiment described with reference to FIGS. 1 to 20. Therefore, the technique described in the section of <Connection Method of Superconducting Wire Material > can be applied in combination with other techniques already described. For example, in the laminate 9B illustrated in FIG. 22, the following connection method can be obtained by applying the technique described with reference to FIG. 20. That is, in the lamination step illustrated in FIG. 21, the spacer member 19 (see FIG. 20) that can be brought into contact with the screw SS1 is disposed between the laminate 9B illustrated in FIG. 22 and the bottom portion 23. When the screw SS1 is tightened, a pressing force from the screw SS1 is applied to the laminate 9B via the spacer member 19.

The present invention is not limited to the above embodiment and examples, and various changes can be made without departing from the gist of the present invention. For example, as described above, the member that protects the superconducting wire material has been taken as an example of the linear material protection member, but the structure of the protection member 100 can be used as a protection member for another linear material. For example, an example of use as a protection member for protecting a pipe as a flow path of liquid or gas, an electric wire, or the like can be exemplified.

In addition, for example, the specific dimensions of each of the components such as the superconducting wire material 10 and the protection member 100 have been exemplified and described, but each numerical value can be changed without departing from the gist of the above description. In addition, in FIGS. 3 and 7, an example in which four wires 30 are provided as reinforcing members in each of the plurality of blocks 20 has been described. However, the number of wires 30 is not limited to four, and may be three or less (however, at least one is necessary), or five or more.

In addition, for example, although various modification examples have been described above, a part of the embodiment can be applied in combination with another embodiment.

The block 20A illustrated in FIGS. 3 to 6, 10, 19, 20, and 22 and the block 20C illustrated in FIGS. 12 to 16 and 18 can be expressed as follows. That is, the block (block 20A or block 20C) according to one embodiment includes a roof portion, a side wall portion, and a side wall portion, and includes a linear material holding portion formed by the roof portion, the side wall portion, and the side wall portion. The block includes a screw hole in at least one of the roof portion, the side wall portion, and the side wall portion.

### INDUSTRIAL APPLICABILITY

The present invention can be used for a protection member of a linear material used for various devices such as a nuclear fusion reactor, a plasma generator, an accelerator, superconducting power transmission, power storage, a superconducting motor, and a liquid transport pipe.

### REFERENCE SIGNS LIST

2 cooling pipe
10, 10A, 10B superconducting wire material (linear material)
9, 11, 16, 17, 18 superconducting tape wire material
9A, 9B, 11A, 11B, 11C, 16A, 17A, 17C, 18Alaminate
12 metal band
13 cooling pipe
14 spacer
19 metal plate
20, 20A, 20B, 20C, 20AA, 20AB, 20ACblock
20A1, 20A2, 20B1, 20B2, 20C1, 20C2, 20C3, component
20GA, 20GB block group
20s1, 20s2, 20s3, 20s4 side
21, 21A, 21B, 21C holding space
22 roof portion
22a, 23a, 23a1, 23a2 upper surface
22b, 23b lower surface
23, 23A, 23B bottom portion
24, 25 side wall portion
24a, 25a inner surface
26, 27 opening portion
28 middle wall portion
30, 31, 31A, 32, 32A, 33, 33A, 34, 34A wire
31AT1, 31AT2, 31T, 31T1, 31T2, 32AT, 32T, 32T1, 32T2, 33AT, 33T, 34AT, 34T groove
40 lead portion
41 support portion
41a upper surface
41H through-hole
42 lid portion
42b lower surface
42H through-hole
43 bolt
44 nut
100 protection member
200, 201, 202 coil
BL gap
BP1, BP2, BP3, BP4, BP5, BP6, BP7, BP8 fixing portion
CMF1, CMF2 coated metal film
CR1, CR2 central region
MDL1, MDL2 intermediate layer
MS1, MS2 metal substrate
PML1, PML2 protective metal layer
SCL1, SCL2 superconducting layer
SS1, SS2 screw
TH1, TH2 screw hole
TR1, TR2, TR3, TR4, TR5, TR6 wire holding portion

## Claims

1. A linear material protection member comprising:
a plurality of blocks for holding a periphery of a linear material extending in a first direction to surround the periphery of the linear material; and
a first wire that extends in the first direction and is engaged with the plurality of blocks,
wherein the linear material includes a first linear material including a first laminate made of a plurality of first superconducting tape wire materials laminated,
wherein the plurality of blocks is sequentially arranged along the first direction,
wherein each of the plurality of blocks includes
a holding space for holding the linear material,
a roof portion that covers the holding space,
a bottom portion located on an opposite side of the roof portion with the holding space interposed between the roof portion and the bottom portion,
a first side wall portion that is continuous with each of the roof portion and the bottom portion, and
a second side wall portion that is continuous with each of the roof portion and the bottom portion, and is located on an opposite side of the first side wall portion with the holding space interposed between the first side wall portion and the second side wall portion,
wherein the plurality of blocks includes
a first block, and
a second block having a shape different from a shape of the first block,
wherein the first block includes
a first component constituting the roof portion, the first side wall portion, and the second side wall portion, and
a second component that is joined to the first component via the first wire and constitutes the bottom portion,
wherein the first component includes
a first wire holding portion that is formed at any one of a position where the first side wall portion and the bottom portion are combined and a position where the second side wall portion and the bottom portion are combined, and is able to engage with the first wire, and
a first fixing portion that is formed at the other of the position where the first side wall portion and the bottom portion are combined and the position where the second side wall portion and the bottom portion are combined, and is able to fix the second component, and
wherein the second component includes
a first side disposed along one of the first side wall portion and the second side wall portion,
a second side disposed on an opposite side of the first side,
a central region disposed between the first side and the second side,
a second wire holding portion and a third wire holding portion that are formed along the first side in a state of being able to sandwich the first wire holding portion of the first component,
a second fixing portion that is disposed along the second side and is fixable to the first fixing portion of the first component, and
a first screw hole that is disposed in the central region and is formed to penetrate the second component in a thickness direction.

2. The linear material protection member according to claim 1,
wherein the first block is disposed at one end portion of the arrangement of the plurality of blocks.

3. The linear material protection member according to claim 2,
wherein each of a first inner surface of the first side wall portion and a second inner surface of the second side wall portion, which are included in the first component of the first block, has an arc shape in side view in the first direction, and
wherein an upper surface of the bottom portion of the first block and a lower surface of the roof portion of the first block are flat surfaces.

4. The linear material protection member according to claim 3,
wherein a metal plate is disposed on the upper surface of the bottom portion, and
wherein a screw inserted into the first screw hole is in contact with the metal plate.

5. The linear material protection member according to claim 2, further comprising:
a second wire that extends in a first direction and is engaged with the plurality of blocks,
wherein the second block includes
a third component constituting the roof portion and the first side wall portion, and
a fourth component constituting the bottom portion and the second side wall portion,
wherein the third component includes
a fifth wire holding portion and a sixth wire holding portion that are formed along the first direction in a state of being able to sandwich a fourth wire holding portion of the fourth component, and
a third fixing portion that is able to fix the fourth component, and
wherein the fourth component includes
the fourth wire holding portion that is formed at any one of a position where the first side wall portion and the roof portion are combined and a position where the second side wall portion and the bottom portion are combined, and is able to engage with the second wire, and
a fourth fixing portion that is formed at the other of the position where the first side wall portion and the roof portion are combined and the position where the second side wall portion and the bottom portion are combined, and is fixable to the third fixing portion of the third component.

6. The linear material protection member according to claim 5,
wherein each of a first inner surface of the first side wall portion and a second inner surface of the second side wall portion, which are included in the first component of the first block, has an arc shape in side view in the first direction,
wherein an upper surface of the bottom portion of the first block has a flat surface, and
wherein the holding space of the second block has a columnar shape in side view in the first direction.

7. The linear material protection member according to claim 2,
wherein each of the first side wall portion and the second side wall portion included in the first component of the first block has an opening portion that penetrates the first side wall portion or the second side wall portion in a second direction intersecting with the first direction.

8. The linear material protection member according to claim 2,
wherein each of the plurality of first superconducting tape wire materials is electrically connected to a lead portion via a plurality of second superconducting tape wire materials,
wherein the lead portion is disposed adjacent to the first block,
wherein the plurality of second superconducting tape wire materials is sandwiched between lead portions,
wherein the lead portion includes
a support portion that supports a second laminate of the plurality of second superconducting tape wire materials, and
a lid portion that covers the second laminate,
wherein the second laminate is sandwiched between the support portion and the lid portion and extends toward the first block,
wherein the plurality of first superconducting tape wire materials and the plurality of second superconducting tape wire materials are disposed in the holding space of the first block,
wherein the plurality of first superconducting tape wire materials and the plurality of second superconducting tape wire materials are alternately laminated in the holding space of the first block, and
wherein a laminate of the plurality of first superconducting tape wire materials and the plurality of second superconducting tape wire materials is fixed by a screw inserted into the first screw hole.

9. The linear material protection member according to claim 8,
wherein each of the plurality of second superconducting tape wire materials extends along the first direction,
wherein the second component includes, in the central region, the first screw hole and a plurality of screw holes arranged along the first direction, and
wherein the laminate of the plurality of first superconducting tape wire materials and the plurality of second superconducting tape wire materials is fixed by screws respectively inserted into the plurality of screw holes.

10. The linear material protection member according to claim 2,
wherein each of the plurality of first superconducting tape wire materials is electrically connected to the lead portion via a plurality of second superconducting tape wire materials sandwiched between lead portions disposed adjacent to the first block,
wherein the first block as a first piece, the first block as a second piece, and the first block as a third piece are arranged along the first direction between the lead portion and the second block in order from a side closer to the lead portion,
wherein the lead portion includes
a support portion that supports a second laminate of the plurality of second superconducting tape wire materials, and
a lid portion that covers the second laminate,
wherein the second laminate is sandwiched between the support portion and the lid portion, and extends toward the first block of the first piece,
wherein the plurality of first superconducting tape wire materials and the plurality of second superconducting tape wire materials are disposed in the holding space of each of the first blocks of the first piece, the second piece, and the third piece,
wherein the plurality of first superconducting tape wire materials and the plurality of second superconducting tape wire materials are laminated in the holding space of each of the first blocks of the first piece, the second piece, and the third piece, and
wherein a laminate of the plurality of first superconducting tape wire materials and the plurality of second superconducting tape wire materials is fixed by a screw inserted into the first screw hole provided in each of the first blocks of the first piece, the second piece, and the third piece.

11. The linear material protection member according to claim 10,
wherein a gap is interposed between the plurality of first superconducting tape wire materials and the plurality of second superconducting tape wire materials in the first direction, and
wherein a total value of thicknesses of gaps is greater than half of a thickness of the first laminate in a lamination direction of the plurality of first superconducting tape wire materials and the plurality of second superconducting tape wire materials.

12. The linear material protection member according to claim 2,
wherein the linear material includes
a first laminate in which the plurality of first superconducting tape wire materials is laminated,
a cooling pipe disposed adjacent to the first laminate, and
a metal band wound to bundle the first laminate and the cooling pipe.

13. A linear material protection member that protects
a first linear material that includes a plurality of first superconducting tape wire materials laminated and extends in a first direction,
a second linear material that includes a plurality of second superconducting tape wire materials laminated and extends in the first direction, and
a plurality of third superconducting tape wire materials that extends in a second direction intersecting with the first direction and electrically connect the plurality of first superconducting tape wire materials and the plurality of second superconducting tape wire materials, the linear material protection member comprising:
a first block group made of a plurality of blocks for holding the first linear material to surround the first linear material;
a second block group made of a plurality of blocks for holding the second linear material to surround the second linear material;
a third block for holding a part where the plurality of first superconducting tape wire materials and the plurality of second superconducting tape wire materials are electrically connected via the plurality of third superconducting tape wire materials, so as to surround the part;
a first wire that extends in the first direction and is engaged with the first block group and the third block; and
a second wire that extends in the first direction and is engaged with the second block group and the third block,
wherein the third block includes
a first holding space for holding the first linear material,
a second holding space for holding the second linear material,
a roof portion that covers the first holding space and the second holding space,
a first bottom portion located on an opposite side of the roof portion with the first holding space interposed between the roof portion and the first bottom portion,
a second bottom portion located on an opposite side of the roof portion with the second holding space interposed between the roof portion and the second bottom portion,
a first side wall portion that is continuous with each of the roof portion and the first bottom portion,
a second side wall portion that is continuous with each of the roof portion and the second bottom portion and is located on an opposite side of the first side wall portion,
a middle wall portion located between the first side wall portion and the second side wall portion,
a third holding space that is formed to cause the first holding space and the second holding space to communicate with each other and holds the plurality of third superconducting tape wire materials,
a first component that constitutes the roof portion, the first side wall portion, the second side wall portion, and the middle wall portion,
a second component that is joined to the first component via the first wire and constitutes the first bottom portion, and
a third component that is joined to the first component via the second wire and constitutes the second bottom portion,
wherein the first component includes
a first wire holding portion that is formed at a position where the first side wall portion and the first bottom portion are combined and that is able to engage with the first wire,
a first fixing portion that is formed at a position where the middle wall portion and the first bottom portion are combined and that is able to fix the second component, and
a second fixing portion that is formed at a position where the second side wall portion and the second bottom portion are combined, and that is able to fix the third component,
wherein the second component includes
a first side disposed along the first side wall portion,
a second side disposed on an opposite side of the first side,
a first central region disposed between the first side and the second side in the second direction,
a second wire holding portion and a third wire holding portion formed along the first side in a state of being able to sandwich the first wire holding portion of the first component,
a third fixing portion that is disposed along the second side and is fixable to the first fixing portion of the first component,
a fourth wire holding portion that is formed at a position where the middle wall portion and the second bottom portion are combined, and that is able to engage with the second wire, and
a first screw hole that is disposed in the first central region and is formed to penetrate the second component in a thickness direction, and
wherein the third component includes
a third side disposed along the second side of the second component,
a fourth side disposed on an opposite side of the third side,
a second central region disposed between the third side and the fourth side in the second direction,
a fifth wire holding portion and a sixth wire holding portion formed along the third side in a state of being able to sandwich the second wire holding portion of the second component,
a fourth fixing portion that is disposed along the fourth side and is fixable to the second fixing portion of the first component, and
a second screw hole that is disposed in the second central region and is formed to penetrate the third component in a thickness direction.

14. The linear material protection member according to claim 13,
wherein the first linear material and the second linear material are connected via a plurality of the third blocks arranged to be adjacent to each other along the first direction.

15. A connection method of a superconducting wire material, the connection method comprising:
a step (a) of preparing a first superconducting wire material including a first laminate made of a plurality of first superconducting tape wire materials laminated;
a step (b) of preparing a second superconducting wire material including a second laminate made of a plurality of second superconducting tape wire materials laminated;
a step (c) of forming a third laminate by alternately laminating parts of the plurality of first superconducting tape wire materials and parts of the plurality of second superconducting tape wire materials to overlap each other, after the step (a) and the step (b);
a step of (d) preparing a first block that is a protection member being able to hold a periphery of the third laminate to surround the periphery of the third laminate; and
a step (e) of, after the step (c) and the step (d), inserting a screw into a screw hole formed in the first block and fixing the third laminate in a holding space of the first block by fastening,
wherein the first block includes
the holding space that is able to hold the third laminate,
a roof portion that covers the holding space,
a bottom portion located on an opposite side of the roof portion with the holding space interposed between the roof portion and the bottom portion, and
the screw hole that penetrates the bottom portion in a thickness direction and communicates with the holding space.

16. The connection method of a superconducting wire material according to claim 15,
wherein each of the plurality of first superconducting tape wire materials includes
a first superconducting layer made of a superconducting material,
a first metal substrate that supports the first superconducting layer,
a first intermediate layer located between the first superconducting layer and the first metal substrate,
a first protective metal layer that has an electrical conductivity higher than the first metal substrate and is disposed on an opposite side of the first intermediate layer with the first superconducting layer interposed between the first intermediate layer and the first protective metal layer, and
a first coated metal film that has an electrical conductivity higher than the first metal substrate and covers a laminate of the first superconducting layer, the first metal substrate, the first intermediate layer, and the first protective metal layer,
wherein each of the plurality of second superconducting tape wire materials includes
a second superconducting layer made of a superconducting material,
a second metal substrate that supports the second superconducting layer,
a second intermediate layer located between the second superconducting layer and the second metal substrate,
a second protective metal layer that has an electrical conductivity higher than the second metal substrate and is disposed on an opposite side of the second intermediate layer with the second superconducting layer interposed between the second intermediate layer and the second protective metal layer, and
a second coated metal film that has an electrical conductivity higher than the second metal substrate and covers a laminate of the second superconducting layer, the second metal substrate, the second intermediate layer, and the second protective metal layer, and
wherein the third laminate formed in the step (c) includes
a first connection part where the first superconducting layer and the second superconducting layer face each other without the first metal substrate, the first intermediate layer, the second metal substrate, and the second intermediate layer interposed between the first superconducting layer and the second superconducting layer, and
a second connection part where the first superconducting layer and the second superconducting layer face each other with the first metal substrate, the first intermediate layer, the second metal substrate, and the second intermediate layer interposed between the first superconducting layer and the second superconducting layer.

17. The connection method of a superconducting wire material according to claim 16,
wherein the step (c) includes
a step (c1) of acid-washing each of the plurality of first superconducting tape wire materials and the plurality of second superconducting tape wire materials,
a step (c2) of removing an acid from a surface of each of the plurality of first superconducting tape wire materials and the plurality of second superconducting tape wire materials after the step (c1), and
a step (c3) of alternately laminating parts of the plurality of first superconducting tape wire materials and parts of the plurality of second superconducting tape wire materials to overlap each other, after the step (c2).

18. The connection method of a superconducting wire material according to claim 15,
wherein, in the step (c),
a spacer member that is able to come into contact with the screw is disposed between the third laminate and the bottom portion, and
when the screw is tightened, a pressing force from the screw is applied to the third laminate through the spacer member.

19. The connection method of a superconducting wire material according to claim 15,
wherein, in the step (c), parts of the plurality of first superconducting tape wire materials and parts of the plurality of second superconducting tape wire materials are alternately laminated one by one to overlap each other.
